# EUROPÄISCHE PATENTSCHRIFT

(11) **EP 4 565 461 B1**
(45) Veröffentlichungstag und Bekanntmachung des Hinweises auf die Patenterteilung: **10.06.2026**
(21) Anmeldenummer: 23751953.3
(22) Anmeldetag: 03.08.2023
(51) Int. Cl.: B60T 1/00, B60T 7/12, B60T 7/14, B60T 7/22, B60T 8/174, B60T 13/66, B60T 13/74, B60T 17/20, B23Q 11/00, B27G 19/02, F16P 3/14, B27G 19/00

(54) **NOTBREMSBAUGRUPPE FÜR EIN MOTORISCH ANGETRIEBENES WERKZEUG UND VERFAHREN ZUM BETREIBEN EINER NOTBREMSBAUGRUPPE**
EMERGENCY BRAKING ASSEMBLY FOR A MOTOR-DRIVEN TOOL, AND METHOD FOR OPERATING AN EMERGENCY BRAKING ASSEMBLY
ENSEMBLE DE FREINAGE D'URGENCE POUR UN OUTIL MOTORISÉ ET PROCÉDÉ DE FONCTIONNEMENT D'UN ENSEMBLE DE FREINAGE D'URGENCE

(30) Priorität: 03.08.2022 DE 102022208076
(43) Veröffentlichungstag der Anmeldung: 11.06.2025
(73) Patentinhaber: Festool GmbH, 73240 Wendlingen (DE)
(72) Erfinder: SCHMID, Markus, 73066 Uhingen (DE); FRANK, Josua, 73660 Urbach (DE); SCHOCK, Christian, 73614 Schorndorf (DE); DOLL, Kevin, 73650 Winderbach (DE)
(74) Vertreter: Maiwald GmbH
(86) Internationale Anmeldenummer: PCT/EP2023/071526
(87) Internationale Veröffentlichungsnummer: WO 2024/028430

(56) Entgegenhaltungen:
- EP-A1- 3 772 398
- EP-A2- 2 813 722
- DE-A1- 102016 005 003
- DE-A1- 102018 116 437
- DE-A1- 102019 208 438
- DE-A1- 102019 210 187
- DE-A1- 102020 206 756
- DE-B3- 102019 117 447

## Beschreibung

Die Erfindung ist auf eine Notbremsbaugruppe für ein motorisch angetriebenes Werkzeug gerichtet.

Ferner betrifft die Erfindung ein Verfahren zum Betreiben einer Notbremsbaugruppe.

Motorisch angetriebene Werkzeuge mit Notbremsbaugruppen sind aus dem Stand der Technik bekannt. Dasselbe gilt für Notbremsbaugruppen. Diese dienen dazu, ein Schneidelement, z. B. ein Sägeblatt, des Werkzeugs zum Stillstand zu bringen, wenn während des Betriebs ein Kontakt eines Nutzers mit dem Schneidelement droht oder detektiert wird. Auf diese Weise werden Verletzungen vermieden oder in ihrer Schwere reduziert.

In diesem Zusammenhang können Aktuatoren mit Betätigungselementen verwendet werden, die eine Formgedächtnislegierung umfassen. Die Funktion derartiger Aktuatoren beruht dabei auf einer thermisch aktivierten Gitterumwandlung der Formgedächtnislegierung, die zu einer Längenänderung des Betätigungselements führt. Unter einem Betätigungselement wird somit dasjenige Element des Aktuators verstanden, mittels dem die Bewegung generiert wird, die der Aktuator zur Beaufschlagung eines mittels des Aktuators betätigten Systems, hier des Bremssystems oder Bremselements benötigt. Betätigungselemente, die eine Formgedächtnislegierung umfassen sind häufig als Drähte geformt, die sich durch die thermisch aktivierte Gitterumwandlung verkürzen.

Derartige Aktuatoren werden bevorzugt in reversiblen Notbremsbaugruppen verwendet, d.h. in Notbremsbaugruppen, die mehrfach dazu verwendet werden können, das Schneidelement zum Stillstand zu bringen. Es versteht sich, dass bei reversiblen Notbremsbaugruppen der Aktuator mehrfach mit gleichbleibend hoher Zuverlässigkeit betätigbar sein muss.

In EP 3 772 398 A1 wird eine Bremsvorrichtung einer Kettensäge und ein Verfahren zum Schutz eines Bedieners vorgestellt. Die DE 10 2019 117 447 B3 beschreibt eine elektromechanische Bremsvorrichtung und ein Verfahren für deren Betrieb. Die DE 10 2019 210 187 A1 behandelt eine Werkzeugvorrichtung umfassend eine Werkzeug-Bremseinrichtung zum Bremsen einer Werkzeug-Drehbewegung. Die DE 10 2018 116 437 A1 zeigt eine Bremse mit Keilgetriebe und mechanischem Energiespeicher sowie ein Verfahren für deren Betrieb.

Der Erfindung liegt demnach die Aufgabe zugrunde, Notbremsbaugruppen, deren Betätigungselement eine Formgedächtnislegierung umfasst, weiter zu verbessern.

Die Aufgabe wird durch eine Notbremsbaugruppe für ein motorisch angetriebenes Werkzeug gelöst, die eine Haltestruktur, ein drehbar an der Haltestruktur gelagertes Bremselement, insbesondere einen Bremsnocken, und ein drahtförmiges Betätigungselement umfasst, welches eine Formgedächtnislegierung umfasst. Dabei ist ein erstes Ende des Betätigungselements an der Haltestruktur befestigt. Ein zweites Ende des Betätigungselements ist antriebsmäßig mit dem Bremselement gekoppelt. In diesem Zusammenhang wird unter einem drahtförmigen Betätigungselement ein Betätigungselement verstanden, das im Wesentlichen nur auf Zug belastet werden kann, also nur Zugkräfte übertragen kann. Bei Druckbelastung ist ein solches Betätigungselement labil. Ferner impliziert die Drahtform, dass das Betätigungselement sehr viel länger ist als breit. Ein drahtförmiges Betätigungselement, das eine Formgedächtnislegierung umfasst, wird häufig vereinfachend auch als Formgedächtnislegierungsdraht oder FGL-Draht bezeichnet. Die Haltestruktur ist vorliegend beispielsweise durch ein Aktuatorgehäuse, d.h. durch ein Gehäuse des das Betätigungselement umfassenden Aktuators, oder einen Bremssattel oder eine Kombination davon gebildet. Die Tatsache, dass das zweite Ende des Betätigungselements antriebsmäßig mit dem Bremselement gekoppelt ist, bedeutet, dass das Bremselement über diese Kopplung angetrieben werden kann, also zumindest von einer Freigabestellung, in der das Bremselement keine Bremswirkung hat, in eine Bremsstellung überführt werden kann, in der es eine Bremswirkung hat. Dabei wird bevorzugt das Überführen des Bremselements von der Freigabestellung in die Bremsstellung durch ein Kontrahieren oder Zusammenziehen des Betätigungselements verursacht. Das Betätigungselement treibt somit das Bremselement an. Eine derartige Konfiguration ist einfach und robust. Insbesondere ist eine derartige Konfiguration strukturell einfacher als Konstruktionen von Notbremsbaugruppen, bei denen mittels eines Betätigungselements, welches eine Formgedächtnislegierung umfasst, lediglich eine Bewegungsfreigabe gesteuert werden kann.

Zusammenfassend wird also unter einer Notbremsbaugruppe eine Kombination aus einem Aktuator und einem Bremselement verstanden. Vorliegend weist der Aktuator ein Betätigungselement auf, welches eine Formgedächtnislegierung umfasst. Das Bremselement ist beispielsweise ein Bremsnocken. Eine derartige Notbremsbaugruppe kann Teil einer Notbremseinheit sein, die dazu ausgebildet, ein Schneidelement eines motorisch angetriebenen Werkzeugs bis zum Stillstand abzubremsen.

Im Zusammenhang der vorliegenden Erfindung wird unter einem Bremsnocken ein drehbar gelagertes Bremselement verstanden, das zumindest abschnittsweise exzentrisch ist, sodass das Bremselement durch Drehen von einer Freigabestellung, in der das Bremselement keine Bremswirkung hat, in eine Bremsstellung überführt werden kann, in der es eine Bremswirkung hat.

Es versteht sich, dass das Betätigungselement an seinen Enden Isolationselemente umfassen kann, um das Betätigungselement von der Haltestruktur und/oder vom Bremselement elektrisch zu isolieren.

In einem Beispiel ist die Haltestruktur aus einem Kunststoffmaterial hergestellt. In diesem Fall ist ein Isolationselement am ersten Ende des Betätigungselements unnötig.

Gemäß einer Alternative ist das zweite Ende des Betätigungselements am Bremselement befestigt. In dieser Alternative ist das Betätigungselement also sowohl an der Haltestruktur als auch am Bremselement befestigt. Das Bremselement lässt sich also direkt mittels des Betätigungselements antreiben. Ein derartiger Aufbau ist besonders einfach und robust.

Gemäß einer anderen Alternative ist das zweite Ende des Betätigungselements über wenigstens ein Zwischenelement mit dem Bremselement gekoppelt. Es ist also das wenigstens eine Zwischenelement derart zwischen dem Bremselement und dem zweiten Ende des Betätigungselements angeordnet, dass sich das Bremselement mittels des Betätigungselements und über das Zwischenelement antreiben lässt. Ein solches Zwischenelement kann einerseits dafür verwendet werden, eine geometrische Distanz zwischen dem zweiten Ende des Betätigungselements und dem Bremselement zu überbrücken. Andererseits kann das Zwischenelement auch dazu dienen, eine Bewegung des zweiten Endes des Betätigungselements zu wandeln, sodass diejenige Bewegung, mit der das Bremselement antriebsmäßig beaufschlagt wird, sich von der Bewegung des zweiten Endes des Betätigungselements unterscheiden kann. In diesem Fall kann das Zwischenelement auch als Getriebeelement verstanden werden. Ein Zwischenelement bietet somit Freiheitsgrade zur Anpassung der Bewegung des Bremselements bei einer Betätigung mittels des Betätigungselements.

Dabei kann das wenigstens eine Zwischenelement einen Schlitten umfassen, der bewegbar an der Haltestruktur gelagert ist. Es wird also der Schlitten mittels des Betätigungselements angetrieben. Der Schlitten wiederum treibt direkt oder indirekt das Bremselement an. Dabei ist ein Schlitten ein strukturell einfaches und zuverlässiges Zwischenelement, sodass sich das Bremselement zuverlässig antreiben lässt.

In einem Beispiel ist der Schlitten aus einem Kunststoffmaterial hergestellt. Eine elektrische Isolation des zweiten Endes des Betätigungselements gegenüber dem Schlitten ist also nicht nötig. Ferner ist ein derartiger Schlitten vergleichsweise leicht, aber trotzdem robust.

Der Schlitten kann über eine Schiebeführung translatorisch bewegbar an der Haltestruktur gelagert sein. Mit anderen Worten ist der Schlitten an der Haltestruktur translatorisch geführt. Nachdem in diesem Zusammenhang die Haltestruktur mechanisch stabil ausgeführt sein kann, ist auch der Schlitten zuverlässig und mechanisch stabil gelagert. Eine solche Konfiguration ist also mechanisch robust.

Auch ist es möglich, dass der Schlitten über wenigstens einen Gelenkarm bewegbar an der Haltestruktur gelagert ist. Auch in dieser Alternative ist der Schlitten zuverlässig und mechanisch stabil gelagert. Der Gelenkarm kann in diesem Zusammenhang starr sein und über lokalisierte Gelenke sowohl mit der Haltestruktur als auch mit dem Schlitten gekoppelt sein. Alternativ kann der Gelenkarm als Festkörpergelenkarm ausgebildet sein. In diesem Beispiel können die Gelenke auch als delokalisiert angesehen werden, da gewisse Abschnitte des Gelenkarms die Funktion der Gelenke bereitstellen, nicht jedoch spezifische Komponenten oder Elemente.

In einer weiteren Ausführungsform ist der Schlitten über ein elastisches Lagerelement mit der Haltestruktur verbunden. Wenn sich der Schlitten bewegt, wird also das elastische Lagerelement elastisch verformt. Auch in dieser Alternative ist der Schlitten einfach und robust an der Haltestruktur gelagert. Ein elastisches Lagerelement hat zudem den Vorteil, dass dem Schlitten eine Ausgangsposition zugeordnet werden kann, in der das elastische Lagerelement beispielsweise unverformt ist. Dabei kann das Lagerelement derart konfiguriert werden, dass der Schlitten bei Abwesenheit äußerer Kräfte mittels des elastischen Lagerelements in diese Ausgangsposition zurückgestellt wird.

In einem Beispiel ist das elastische Lagerelement als Blattfederelement ausgebildet. In einem anderen Beispiel ist das elastische Lagerelement als Membranfeder ausgebildet. In einem weiteren Beispiel ist das elastische Lagerelement als Spiralfederelement ausgebildet.

Das wenigstens eine Zwischenelement kann einen Stößel oder einen Betätigungsstift mit einem bremselementseitigen Ende umfassen. Dabei liegt das bremselementseitige Ende des Stößels oder Betätigungsstifts am Bremselement an oder ist ans Bremselement anlegbar. In diesem Beispiel wird also das Bremselement von einem Stößel oder Betätigungsstift angetrieben. Das ist strukturell einfach und robust. Insbesondere lässt sich mittels eines Stößels oder Betätigungsstifts das Bremselement in zuverlässiger Art und Weise mit Druckkräften beaufschlagen.

In einem Beispiel ist der Stößel oder der Betätigungsstift aus einem Kunststoffmaterial hergestellt.

Vorzugsweise ist das bremselementseitige Ende des Stößels oder Betätigungsstifts vom Bremselement zugentkoppelt oder vom Bremselement zugentkoppelbar. In diesem Beispiel kann mittels des Stößels oder Betätigungsstifts zumindest in einer Betriebssituation, vorzugsweise in allen Betriebssituationen, keine Zugkraft auf das Bremselement ausgeübt werden. Bevorzugt können jedoch Druckkräfte mittels des Stößels oder Betätigungsstifts auf das Bremselement übertragen werden. Bei einer derartigen Konfiguration lässt sich einerseits das Bremselement mittels des Stößels oder Betätigungsstifts zuverlässig mittels einer Druckkraft antreiben. Andererseits erlaubt die Zugentkopplung oder die Zugentkoppelbarkeit auch voneinander unabhängige Bewegungen des Stößels oder Betätigungsstifts gegenüber dem Bremselement und umgekehrt. Das ist insbesondere dann von Vorteil, wenn das Bremselement selbstverstärkend ausgeführt ist, sodass es lediglich in Kontakt mit dem zu bremsenden Schneidelement gebracht werden muss und eine weitere Bewegung des Bremselements aus dem Kontakt zwischen Bremselement und Schneidelement resultiert, also hierfür das Betätigungselement nicht mehr benötigt wird. Vereinfacht gesagt, kann bei einer derartigen Konfiguration das Bremselement mittels einer Druckkraft angeschubst werden. Danach können sich das Bremselement und der Stößel oder Betätigungsstift unabhängig voneinander bewegen. Auf Seiten des Betätigungselements oder des Aktuators, zu dem das Betätigungselement gehört, kann mittels der Zugentkopplung oder Zugentkoppelbarkeit erreicht werden, dass der Aktuator oder das Betätigungselement wieder in eine Ausgangsstellung zurückgestellt werden, die einer Freigabestellung des Bremselements entspricht, wobei das Bremselement aber noch in der Bremsstellung verharrt. Das bewirkt insbesondere einen zuverlässigen Schutz des Aktuators oder des Betätigungselements vor Belastungsspitzen, die aus dem Eingriff des Bremselements resultieren. Somit wird eine hohe Zuverlässigkeit und Lebensdauer des Aktuators und Betätigungselements erreicht.

In einem Beispiel kann das bremselementseitige Ende des Stößels oder Betätigungsstifts entlang einer Richtung parallel zum Betätigungselement zwischen dem ersten Ende des Betätigungselements und dem zweiten Ende des Betätigungselements liegen. Das bremselementseitige Ende des Stößels oder Betätigungsstifts liegt somit neben dem Betätigungselement. Auf diese Weise ergibt sich ein kompakter Aufbau der Notbremsbaugruppe, da das bremselementseitige Ende des Stößels oder Betätigungsstifts die Notbremsbaugruppe entlang einer Dimension, die einer Richtung des Betätigungselements entspricht, die Notbremsbaugruppe ausgehend vom Betätigungselement nicht vergrößert. Vereinfacht gesagt ragt das bremselementseitige Ende des Stößels oder Betätigungsstifts nicht über eine Länge des Betätigungselements hinaus.

Gemäß einer Variante weist der Stößel oder Betätigungsstift eine Mittelachse auf und die Mittelachse verläuft parallel zum Betätigungselement. In diesem Zusammenhang kann die Mittelachse des Betätigungsstiftes auch als Stiftachse bezeichnet werden und die Mittelachse des Stößels als Stößelachse. Das hat zur Folge, dass innerhalb des Betätigungselements wirkende Kräfte und innerhalb des Stößels oder Betätigungsstifts wirkende Kräfte parallel verlaufen. Das ist mechanisch vorteilhaft.

Dabei kann die Mittelachse des Stößels oder Betätigungsstifts vom Betätigungselement beabstandet sein. Die Mittelachsen sind also bevorzugt parallel-versetzt angeordnet. Es ergibt sich somit ein hinsichtlich der Kräfte vorteilhafter Aufbau, der zudem kompakt ist.

Der Stößel oder Betätigungsstift kann an der Haltestruktur geführt sein. Der Stößel oder Betätigungsstift ist damit zuverlässig und robust geführt. Insbesondere handelt es sich dabei um eine Längsführung, d.h. um eine Führung entlang der Mittelachse des Stößels oder Betätigungsstifts. Gleichzeitig kann die Führung dazu ausgebildet sein, den Stößel oder Betätigungsstift an einer Kippbewegung zu hindern. Bevorzugt wird in diesem Zusammenhang der Betätigungsstift oder Stößel nahe an seinem bremselementseitigen Ende geführt, z. B. in derjenigen Hälfte des Betätigungsstifts oder Stößels, die dem Bremselement zugewandt ist. Auf diese Weise kann mittels der Führung an der Haltestruktur eine besonders präzise Position und/oder Bewegung des bremselementseitigen Endes erreicht werden, sodass sich das Bremselement mit hoher Präzision betätigen lässt.

In einem Beispiel ist der Stößel oder Betätigungsstift in einem Führungskanal, der an der Haltestruktur ausgebildet ist, geführt. Eine Alternative zum Führungskanal stellt ein Durchgangsloch oder eine Durchgangsbohrung dar. Eine derartige Führung ist strukturell und fertigungstechnisch besonders einfach.

Vorteilhafterweise ist das bremselementseitige Ende des Betätigungsstifts oder Stößels gerundet. Es lassen sich somit auch bei toleranzbehafteten Relativpositionen zwischen Betätigungsstift oder Stößel und Bremselement mit hoher Zuverlässigkeit Kräfte vom Betätigungsstift oder Stößel in das Bremselement übertragen. Insbesondere werden aus den toleranzbehafteten Relativpositionen resultierende Kraftspitzen durch das gerundete Ende vermieden. Insgesamt arbeitet daher eine derartige Notbremsbaugruppe besonders robust.

In einem Beispiel hat der Stößel oder Betätigungsstift eine kreiszylindrische Grundform. Solche Betätigungsstifte oder Stößel sind fertigungstechnisch besonders einfach.

Ein betätigungselementseitiges Ende des Stößels oder Betätigungsstifts kann mit dem Schlitten gekoppelt sein. Es sind in diesem Beispiel also ein Schlitten und ein Stößel oder Betätigungsstift als Zwischenelemente vorgesehen. Beispielsweise ist die Kopplung zwischen dem Schlitten und dem Betätigungsstift oder Stößel starr, d. h. sie kann entlang einer Mittelachse des Stößels oder Betätigungsstifts sowohl Druck- als auch Zugkräfte übertragen. Ferner kann eine solche starre Kopplung Querkräfte übertragen. Alternativ kann die Kopplung auch derart gestaltet sein, dass sich lediglich Druckkräfte übertragen lassen. In allen Varianten ergibt sich eine zuverlässige Kopplung zwischen Schlitten und Betätigungsstift oder Stößel und damit eine zuverlässige antriebsmäßige Kopplung zwischen Betätigungselement und Bremselement.

In einem Ausführungsbeispiel ist das Betätigungselement mittels eines Führungselements geführt. Auf diese Weise wird ein Ausbauchen des Betätigungselements zumindest lokal unterbunden. Somit wird das Betätigungselement vor unerwünschten Beschädigungen geschützt.

Beispielsweise ist das Führungselement als Abschnitt der Haltestruktur, insbesondere als Abschnitt des Aktuatorgehäuses und/oder des Bremssattels, ausgeführt. Es ergibt sich ein kompakter Aufbau.

Die Notbremsbaugruppe kann auch ein Federelement umfassen, welches das Betätigungselement direkt oder indirekt in eine Richtung federbeaufschlagt, die einer Zugbelastung des Betätigungselements entspricht. Das Betätigungselement wird somit mittels des Federelements unter einer Zugspannung gehalten. Eine Verkürzung des Betätigungselements kann somit direkt und präzise zum Antrieb des Bremselements verwendet werden. Insbesondere wird unerwünschtes Spiel innerhalb der antriebsmäßigen Kopplung des Betätigungselements mit dem Bremselement unterbunden. Darüber hinaus bewirkt eine derartige Federbeaufschlagung, dass sich das Betätigungselement zuverlässig und präzise nach einer Betätigung in einen unbetätigten Zustand zurückstellt. Es versteht sich, dass in einem Fall, in dem ein Schlitten oder ein Stößel oder Betätigungsstift vorgesehen sind, das Federelement am Schlitten, Stößel oder Betätigungsstift abgestützt sein kann. Alternativ oder zusätzlich kann das Federelement an der Haltestruktur und/oder am Führungselement abgestützt sein.

Das Federelement kann den Stößel oder den Betätigungsstift umfangsmäßig zumindest abschnittsweise umgeben. Alternativ oder zusätzlich können das Federelement und der Stößel oder der Betätigungsstift koaxial angeordnet sein. Dadurch ergibt sich ein kompakter Aufbau der Notbremsbaugruppe. Darüber hinaus werden Kippmomente, die aus der Federbeaufschlagung resultieren können, reduziert.

In einer Variante umgibt das Federelement das Betätigungselement umfangsmäßig zumindest abschnittsweise. Auch dadurch ergibt sich ein kompakter Aufbau der Notbremsbaugruppe.

Ferner wird auf diese Weise eine rein axiale Federbeaufschlagung des Betätigungselements begünstigt.

In einem Beispiel ist die Haltestruktur durch ein Aktuatorgehäuse und/oder einen Bremssattel gebildet. Das Betätigungselement ist also am Aktuatorgehäuse und/oder am Bremssattel befestigt. Ein derartiger Aufbau ist einfach und kann kompakt ausgeführt werden.

In einem Beispiel, in dem die Haltestruktur durch das Aktuatorgehäuse und nicht durch den Bremssattel gebildet ist, kann der Aktuator, der das Aktuatorgehäuse und das Betätigungselement umfasst, lösbar am Bremssattel angebracht sein. Hierfür kann ein gängiges Werkzeug nötig sein. Folglich lässt sich der Aktuator bei Bedarf, z. B. im Falle eines Defekts, vom Bremssattel lösen und austauschen. Eine derartige Konfiguration ist somit reparaturfreundlich.

Zudem kann eine Ansteuereinheit für das Betätigungselement zumindest abschnittsweise ins Aktuatorgehäuse integriert sein. Auch das bewirkt einen platzsparenden Aufbau der Notbremsbaugruppe.

Gemäß einer Ausführungsform ist am ersten Ende des Betätigungselements eine erste Hülse vorgesehen und das erste Ende des Betätigungselements ist über die erste Hülse an der Haltestruktur befestigt. Das Betätigungselement kann mittels der Hülse einfach und zuverlässig an der Haltestruktur befestigt werden. Zudem kann die Hülse bei Bedarf ein elektrisch isolierendes Material umfassen, sodass die Hülse ein elektrisches Isolationselement umfasst oder ist.

Gemäß einer weiteren Ausführungsform ist am zweiten Ende des Betätigungselements eine zweite Hülse vorgesehen und das zweite Ende des Betätigungselements ist über die zweite Hülse antriebsmäßig mit dem Bremselement gekoppelt. Das Betätigungselement kann mittels der Hülse einfach und zuverlässig am Bremselement oder einem Zwischenelement befestigt werden. Zudem kann die Hülse bei Bedarf ein elektrisch isolierendes Material umfassen, sodass die Hülse ein elektrisches Isolationselement umfasst oder ist.

Die erste Hülse und/oder die zweite Hülse können an das Betätigungselement angespritzt sein. Auf diese Weise lassen sich die Hülsen einfach und kostengünstig herstellen und am Betätigungselement anbringen. Aufgrund des Anspritzens können weitere Montageschritte zum Anbringen der ersten Hülse und/oder der zweiten Hülse entfallen.

Vorzugsweise ist eine Länge des Betätigungselements kleiner als eine Abmessung der Notbremsbaugruppe entlang einer Richtung parallel zur Länge des Betätigungselements. Alternativ oder zusätzlich liegt eine Länge des Betätigungselements vollständig innerhalb einer parallel zur Länge des Betätigungselements gemessenen Abmessung der Notbremsbaugruppe. Die Länge des Betätigungselements bestimmt somit nicht eine maximale äußere Abmessung der Notbremsbaugruppe. Damit lässt sich unter Verwendung des Betätigungselements eine vergleichsweise kompakte Notbremsbaugruppe schaffen.

Das Betätigungselement und/oder ein Abschnitt der Haltestruktur kann einen Antriebskoppelabschnitt des Bremselements mechanisch abschirmen. In diesem Zusammenhang ist mit einem Antriebskoppelabschnitt ein Abschnitt des Bremselements gemeint, an dem das zweite Ende des Betätigungselements befestigt ist oder an dem ein Zwischenelement, z. B. ein Stößel oder Betätigungsstift, das Bremselement kontaktiert. Betrachtet man die Notbremsbaugruppe von außen, liegt also der Antriebskoppelabschnitt weiter im Inneren der Notbremsbaugruppe als das Betätigungselement und/oder der Abschnitt der Haltestruktur. Dadurch ergibt sich ein Schutz gegenüber einem Eingreifen in den Antriebskoppelabschnitt mit einer menschlichen Hand sowie ein Schutz gegenüber dem Eindringen von Fremdkörpern.

In einem weiteren Beispiel kann wenigstens ein Abschnitt eines Aktuatorgehäuses den Antriebskoppelabschnitt des Bremselements mechanisch abschirmen. Betrachtet man die Notbremsbaugruppe wieder von außen, liegt also der Antriebskoppelabschnitt weiter im Inneren der Notbremsbaugruppe als das Aktuatorgehäuse. Dadurch ergibt sich wieder ein Schutz gegenüber einem Eingreifen in den Antriebskoppelabschnitt mit einer menschlichen Hand sowie ein Schutz gegenüber dem Eindringen von Fremdkörpern.

Außerdem wird die Aufgabe durch ein Verfahren zum Betreiben einer Notbremsbaugruppe mit einem beweglich gelagerten Bremselement zum Bremsen eines Schneidelements eines motorisch angetriebenen Werkzeugs gelöst. Die Notbremsbaugruppe weist ferner ein drahtförmiges Betätigungselement auf, welches eine Formgedächtnislegierung umfasst. Das Betätigungselement ist antriebsmäßig mit dem Bremselement gekoppelt. Das Verfahren umfasst:
- in Bewegung setzen des Bremselements mittels des Betätigungselements und
- anschließendes Aufheben oder Beenden einer Bewegungskopplung zwischen Betätigungselement und Bremselement.

Insbesondere wird mittels dieses Verfahrens das Bremselement derart in Bewegung gesetzt, dass es das zu bremsende Schneidelement kontaktiert. In diesem Fall kann das Bremselement die gewünschte Bremswirkung ausüben. Weiter bevorzugt wirkt das Bremselement mit dem Schneidelement selbstverstärkend zusammen. Das bedeutet, dass sich die bei einem ersten Kontakt zwischen dem Bremselement und dem Schneidelement einstellende Bremswirkung, z. B. in Form eines Bremsmoments, aufgrund einer Wechselwirkung zwischen dem Bremselement und dem Schneidelement weiter vergrößert. Das ist beispielsweise möglich, wenn das Bremselement als Bremsnocken oder gelenkig gelagertes Druckstück ausgeführt ist. Bei einem derartigen Verfahren kann ein vergleichsweise kompaktes und vergleichsweise leistungsschwaches Betätigungselement ausreichen, um auf zuverlässige Art und Weise eine vergleichsweise starke Bremswirkung zu erzielen. Das Aufheben oder Beenden der Bewegungskopplung verhindert dabei, dass unerwünschte mechanische Einflüsse aus dem Bremselement ins Betätigungselement zurückwirken.

Die dem erfindungsgemäßen Verfahren zugrundeliegende Idee kann vereinfacht gesagt dadurch zusammengefasst werden, dass das Bremselement mittels des Betätigungselements lediglich in Richtung des Schneidelements angestoßen oder angeschubst wird, sodass das Bremselement mit dem Schneidelement in Kontakt kommt. Danach wird das Betätigungselement vom Bremselement entkoppelt, sodass sich das Bremselement unabhängig vom Betätigungselement weiter in Richtung einer Bremsstellung bewegen kann. In einer Stellung, in der mittels des Bremselements das Schneidelement gerade abgebremst wird oder bereits bis zum Stillstand abgebremst ist, ist also ein gegebenenfalls vorhandenes Zwischenelement, z. B. der Stößel oder Betätigungsstift, vom Bremselement getrennt, d.h. beabstandet. In einer Variante, in der das Betätigungselement direkt am Bremselement befestigt ist, wird die Entkopplung dadurch erreicht, dass das Betätigungselement in einer Stellung, in der mittels des Bremselements das Schneidelement gerade abgebremst wird oder bereits bis zum Stillstand abgebremst ist, einen Zustand einnimmt, in dem es die Bewegung des Bremselements nicht mehr oder nur noch geringfügig beeinflussen kann. Beispielsweise ist das Betätigungselement in diesem Zusammenhang schlaff. Die Tatsache, dass das Betätigungselement vom Bremselement entkoppelt wird, bewirkt zudem, dass ein Stellweg des Antriebskoppelabschnitts des Bremselements, d.h. eine Bewegungsspanne des Antriebskoppelabschnitts, die dieser bei Betätigung durchläuft, größer sein kann als ein Stellweg des Betätigungselements. Es kann also ein Betätigungselement mit einem vergleichsweise kleinen Stellweg mit einem Bremselement kombiniert werden, das einen vergleichsweise großen Stellweg hat.

Es versteht sich, dass das erfindungsgemäße Verfahren mittels der erfindungsgemäßen Notbremsbaugruppe ausgeführt werden kann.

Gemäß einer Variante umfasst das Verfahren ferner ein Rückstellen des Betätigungselements in eine Ausgangsstellung, wobei das Rückstellen unabhängig vom Bremselement erfolgt. Das Rückstellen des Betätigungselements kann somit bereits erfolgen, während das Bremselement noch in einer Bremsstellung ist. Das Bremselement lässt sich dann zeitlich danach, ebenfalls zurückstellen. Auf diese Weise wird erreicht, dass das Betätigungselement möglichst bald nach seiner Betätigung wieder einsatzbereit ist.

Die Aufgabe wird außerdem durch ein Verfahren zum Betrieb eines Aktuators einer Notbremseinheit für ein motorisch angetriebenes Werkzeug gelöst. Der Aktuator weist ein Betätigungselement auf, welches eine Formgedächtnislegierung umfasst. Dabei ist das Betätigungselement über ein elektrisches Schaltelement mit wenigstens einer elektrischen Energiespeichereinheit gekoppelt, sodass das Betätigungselement durch Betätigen des Schaltelements selektiv mit in der Energiespeichereinheit gespeicherter elektrischer Energie beaufschlagbar ist. Das Verfahren umfasst:
- Erfassen oder Erhalten eines Umgebungsparameters und/oder eines ersten Betriebsparameters des Aktuators und/oder eines zweiten Betriebsparameters des mit dem Aktuator ausgestatteten Werkzeugs, und
- Betreiben des Aktuators in Abhängigkeit des erfassten oder erhaltenen Umgebungsparameters und/oder des erfassten oder erhaltenen ersten Betriebsparameters und/oder des erfassten oder erhaltenen zweiten Betriebsparameters.

In diesem Zusammenhang werden die Bezeichnungen erster Betriebsparameter und zweiter Betriebsparameter lediglich zur besseren Unterscheidbarkeit eines Betriebsparameters des Aktuators und eines Betriebsparameters des mit dem Aktuator ausgestatteten Werkzeugs verwendet. Eine Anzahl an Betriebsparametern ist nicht impliziert. Das erfindungsgemäße Verfahren berücksichtigt also einen Umgebungsparameter, der die Umgebung beschreibt, in der der Aktuator der Notbremseinheit betrieben wird, und/oder einen ersten Betriebsparameter, der einen Betriebszustand des Aktuators charakterisiert, und/oder einen zweiten Betriebsparameter, der einen Betriebszustand des mit dem Aktuator ausgestatteten Werkzeugs charakterisiert. Indem der Aktuator in Abhängigkeit vom Umgebungsparameter und/oder vom ersten Betriebsparameter und/oder vom zweiten Betriebsparameter betrieben wird, wird erreicht, dass sich der Aktuator trotz eines variierenden Umgebungsparameters und/oder ersten Betriebsparameters und/oder zweiten Parameters stets mit einer gleichbleibenden Betriebscharakteristik betreiben lässt. Der Aktuator funktioniert also unabhängig vom Umgebungsparameter und/oder vom ersten Betriebsparameter und/oder vom zweiten Betriebsparameter zuverlässig. Das gilt selbstverständlich auch bei einer mehrfachen Betätigung des Aktuators. Es versteht sich dabei, dass ein Betreiben des Aktuators nur in Abhängigkeit eines Parameters möglich ist, der zuvor auch erfasst oder erhalten wurde. Im Detail kann so sichergestellt werden, dass das Betätigungselement bei jeder Betätigung mit einem Strom beaufschlagt wird, der ausreichend groß ist, um eine sichere und zuverlässige Betätigung des Aktuators zu bewirken. Insbesondere wird eine ausreichend schnelle Betätigung des Aktuators erreicht. Gleichzeitig kann der Strom jedoch so klein gewählt werden, dass eine übermäßige Alterung oder sogar eine Schädigung des Aktuators vermieden wird. Ein kleiner Strom impliziert dabei eine geringe thermische Belastung der Formgedächtnislegierung. Dies führt zu einer verhältnismäßig langsamen Alterung. Ein mittels des erfindungsgemäßen Verfahrens betriebener Aktuator weist folglich eine hohe Zuverlässigkeit und eine hohe Lebensdauer auf.

Beim Werkzeug kann es sich um ein handgeführtes Werkzeug, das auch als Handwerkzeug bezeichnet werden kann, ein halbstationäres Werkzeug oder um ein stationäres Werkzeug handeln.

In einer bevorzugten Ausführungsform ist das Werkzeug eine Säge. Dabei kann es sich um eine Handsäge, eine halbstationäre Säge oder eine stationäre Säge handeln. Ein Beispiel für eine Handsäge ist eine Handkreissäge. Ein Beispiel für eine halbstationäre Säge ist eine mobile Tischkreissäge. Ein Beispiel für eine stationäre Säge ist eine Formatkreissäge.

Bei der elektrischen Energiespeichereinheit kann es sich um einen elektrischen Kondensator oder um eine Batterie handeln. Dabei ist es unerheblich, ob die elektrische Energiespeichereinheit, d.h. der Kondensator oder die Batterie, baulich als Komponente des Aktuators oder als Komponente des Werkzeugs ausgeführt sind. Es kommt lediglich darauf an, dass die elektrische Energiespeichereinheit elektrisch mit dem Betätigungselement gekoppelt ist.

Die Notbremseinheit ist insbesondere eine mehrfach auslösbare Notbremseinheit.

Der Umgebungsparameter kann eine erfasste oder erhaltene Umgebungstemperatur umfassen. Es lässt sich somit der Aktuator unabhängig von der Umgebungstemperatur stets mit hoher Zuverlässigkeit betreiben. Gleichzeitig lassen sich unerwünschte Alterungserscheinungen vermeiden. Das liegt daran, dass in Abhängigkeit der Umgebungstemperatur ein Strom zur Betätigung des Betätigungselements gewählt werden kann, der für die zuverlässige Betätigung des Aktuators ausreichend ist, jedoch darüber hinaus keine unnötige thermische Belastung verursacht. Konkret wird bei einer vergleichsweise hohen Umgebungstemperatur ein vergleichsweise kleiner Strom gewählt. Bei einer vergleichsweise niedrigen Umgebungstemperatur wird ein vergleichsweise hoher Strom gewählt.

Der erste Betriebsparameter kann eine Temperatur des Betätigungselements umfassen. Wie bereits erwähnt, beruht die Funktion des Betätigungselements auf einer thermisch aktivierten Gitterumwandlung der Formgedächtnislegierung. Somit lässt sich eine zuverlässige Funktion des Betätigungselements sicherstellen und gleichzeitig eine übermäßige thermische Beanspruchung, die unerwünschte Alterungseffekte der Formgedächtnislegierung zur Folge hat, vermeiden.

Alternativ oder zusätzlich kann der zweite Betriebsparameter eine Drehzahl des Werkzeugs und/oder eine Leistungsaufnahme des Werkzeugs umfassen. Somit kann eine Auslösung des Notbremssystems mittels des Aktuators nur zulässig sein, wenn der zweite Betriebsparameter eine definierte Drehzahl und/oder eine definierte Leistungsaufnahme überschreitet.

Gemäß einer Ausführungsform umfasst das Betreiben des Aktuators in Abhängigkeit des erfassten oder erhaltenen Umgebungsparameters und/oder des erfassten oder erhaltenen ersten Betriebsparameters und/oder des erfassten oder erhaltenen zweiten Betriebsparameters das Einstellen eines Betätigungsstromparameters für das Betätigungselement in Abhängigkeit des erfassten oder erhaltenen Umgebungsparameters und/oder des erfassten oder erhaltenen ersten Betriebsparameters und/oder des erfassten oder erhaltenen zweiten Betriebsparameters. Wieder versteht es sich, dass der Aktuator nur in Abhängigkeit eines Parameters betrieben werden kann, der zuvor auch erfasst oder erhalten wurde. In diesem Zusammenhang wird der Betätigungsstromparameter als eine den für die Betätigung des Betätigungselements verwendeten Strom charakterisierende Kenngröße verstanden. Der Betätigungsstromparameter beschreibt z. B. einen maximalen Betätigungsstrom oder eine Dauer der Bestromung. Es wird betont, dass aufgrund der vergleichsweise kurzen Betätigungszeit von nur wenigen Millisekunden der Betätigungsstromparameter zeitlich vor der Betätigung eingestellt wird. Der Betätigungsstromparameter hat einen direkten Einfluss auf die Alterung des Betätigungselements.

In einer Variante wird der Betätigungsstromparameter eingestellt, indem ein zwischen der Energiespeichereinheit und dem Betätigungselement wirkender elektrischer Widerstand in Abhängigkeit des erfassten oder erhaltenen Umgebungsparameters und/oder des erfassten oder erhaltenen ersten Betriebsparameters und/oder des erfassten oder erhaltenen zweiten Betriebsparameters eingestellt wird. Mittels des elektrischen Widerstands wird ein auf das Betätigungselement wirkender Verlauf des Betätigungsstroms justiert.

In einer anderen Variante wird der Betätigungsstromparameter eingestellt, indem eine Kapazität der Energiespeichereinheit in Abhängigkeit des erfassten oder erhaltenen Umgebungsparameters und/oder des erfassten oder erhaltenen ersten Betriebsparameters und/oder des erfassten oder erhaltenen zweiten Betriebsparameters eingestellt wird. Es wird also eingestellt, welche Ladungsmenge auf der Energiespeichereinheit speicherbar und über das Schaltelement ins Betätigungselement einleitbar ist. Es versteht sich dabei, dass eine vergleichsweise große Ladungsmenge zu einem vergleichsweise hohen und/oder einem vergleichsweise lange anhaltenden Betätigungsstrom führt.

In diesem Zusammenhang kann eine Energiespeichereinheit mit einstellbarer Kapazität geschaffen werden, indem eine Energiespeichereinheit gewählt wird, deren Kapazität an sich einstellbar ist. Alternativ kann eine Energiespeichereinheit gewählt werden, die zwei oder mehr Energiespeicherelemente umfasst, wobei jedes der Energiespeicherelemente wahlweise zugeschaltet und abgeschaltet werden kann.

Auch ist es möglich, dass der Betätigungsstromparameter eingestellt wird, indem eine Speicherspannung der Energiespeichereinheit in Abhängigkeit des erfassten oder erhaltenen Umgebungsparameters und/oder des erfassten oder erhaltenen ersten Betriebsparameters und/oder des erfassten oder erhaltenen zweiten Betriebsparameters eingestellt wird. Auch über die Speicherspannung lässt sich einstellen, welche Ladungsmenge auf der Energiespeichereinheit speicherbar und über das Schaltelement ins Betätigungselement einleitbar ist. Es versteht sich dabei, dass eine vergleichsweise große Ladungsmenge zu einem vergleichsweise hohen und/oder einem vergleichsweise lange anhaltenden Betätigungsstrom führt.

Alternativ oder zusätzlich kann der Betätigungsstromparameter eingestellt werden, indem eine Betätigungszeit des Schaltelements in Abhängigkeit des erfassten oder erhaltenen Umgebungsparameters und/oder des erfassten oder erhaltenen ersten Betriebsparameters und/oder des erfassten oder erhaltenen zweiten Betriebsparameters eingestellt wird. Es wird also in Abhängigkeit des Umgebungsparameters und/oder des ersten Betriebsparameters und/oder des zweiten Betriebsparameters eine Dauer der Bestromung eingestellt.

Gemäß einem Ausführungsbeispiel wird das Betätigungselement temperiert. Das heißt, dass eine Temperatur des Betätigungselements auf einen bestimmten Wert oder auf einen bestimmten Wertebereich eingestellt wird. Für den Fall, dass das Temperieren bewirkt, dass das Betätigungselement auf eine Temperatur gebracht wird, die über einer Umgebungstemperatur liegt, kann auch von einem Vorheizen gesprochen werden. Dies kann alternativ als Priming bezeichnet werden. Das Temperieren des Betätigungselements führt dazu, dass es sich unabhängig von einer Umgebungstemperatur betätigen lässt. Insbesondere ist unabhängig von der Umgebungstemperatur eine konstante Energie zur Betätigung notwendig. Anders gesagt wird ein erster Betriebsparameter des Betätigungselements, der die Temperatur des Betätigungselements beschreibt, konstant oder in einem vorgegebenen Bereich gehalten. Dadurch wird erreicht, dass das Betätigungselement einerseits zuverlässig funktioniert und andererseits Alterungsprozesse unterbunden werden.

Das Betätigungselement kann auf zwei Arten temperiert werden. Entweder wird dem Betätigungselement von außen Wärme zugeführt oder es wird ein elektrischer Strom durch das Betätigungselement geleitet, der zu einer Erwärmung desselben führt. In beiden Alternativen lässt sich eine Temperatur des Betätigungselements präzise einstellen. Selbstverständlich können diese Arten der Temperierung auch kombiniert werden.

Dabei kann das Betätigungselement auf eine Temperatur oberhalb einer aktuellen Umgebungstemperatur und unterhalb einer Schalttemperatur, d.h. eine Temperatur bei der die Gitterumwandlung beginnt, des Betätigungselements temperiert werden. Beispielsweise wird das Betätigungselement auf eine Temperatur temperiert, die 50% bis 90% der Schalttemperatur des Betätigungselements entspricht. Auf diese Weise wird erreicht, dass das Betätigungselement ausgehend vom temperierten Zustand mittels eines vergleichsweise kleinen Betätigungsstroms und/oder einer vergleichsweise kleinen Betätigungsladungsmenge betätigt werden kann. Nachdem aufgrund des Temperierens eine Mindesttemperatur des FGL-Drahts sichergestellt ist, kann ein Betätigungsstrom gewählt werden, der kleiner ist als ein notwendiger Betätigungsstrom bei einer niedrigeren Temperatur des Betätigungselements. Das hilft auch, das Betätigungselement vor unerwünschten Alterungseffekten durch zu hohe Ströme zu schützen und/oder eine maximale zeitliche Performance unabhängig von der Umgebungstemperatur zu gewährleisten.

In diesem Zusammenhang ist es einerseits möglich, das Betätigungselement auf eine bestimmte Temperatur zu temperieren. Andererseits kann eine Temperatur-Widerstandskennlinie der Formgedächtnislegierung genutzt werden, um das Betätigungselement auf eine Temperatur zu temperieren, die einem maximalen elektrischen Widerstand entspricht. Im ersten Fall spricht man von temperaturabhängigem Vorheizen oder Temperieren. Im zweiten Fall spricht man von widerstandsabhängigem Vorheizen oder Temperieren.

In einer Variante wird das Werkzeug deaktiviert bis eine gewünschte Mindesttemperatur des Betätigungselements erreicht ist. Auf diese Weise wird sichergestellt, dass die Notbremseinheit einsatzbereit ist, bevor mit dem Werkzeug gearbeitet werden kann.

Alternativ kann mittels des Werkzeugs ein Warnsignal oder ein Warnhinweis ausgegeben werden, solange eine gewünschte Mindesttemperatur des Betätigungselements noch nicht erreicht ist. Auf diese Weise kann ein Nutzer um die Einsatzbereitschaft der Notbremseinheit wissend entscheiden, ob er mit dem Werkzeug arbeiten möchte oder nicht.

In einer weiteren Alternative wird in einem Fall, in dem eine gewünschte Mindesttemperatur des Betätigungselements noch nicht erreicht ist, ein ausreichend großer Betätigungsstrom und/oder eine ausreichend große Betätigungsladungsmenge eingestellt. Sobald die gewünschte Mindesttemperatur erreicht ist, wird der Betätigungsstrom und/oder die Betätigungsladungsmenge reduziert.

Die Aufgabe wird ferner mittels einer Ansteuerschaltung für einen Aktuator einer Notbremseinheit für ein motorisch angetriebenes Werkzeug gelöst. Der Aktuator weist ein Betätigungselement auf, welches eine Formgedächtnislegierung umfasst. Die Ansteuerschaltung umfasst wenigstens eine elektrische Energiespeichereinheit und ein elektrisches Schaltelement. Die elektrische Energiespeichereinheit und das elektrische Schaltelement sind elektrisch mit dem Betätigungselement koppelbar, sodass das Betätigungselement durch Betätigen des Schaltelements selektiv mit in der Energiespeichereinheit gespeicherter elektrischer Energie beaufschlagbar ist. Dabei weist die Energiespeichereinheit eine einstellbare Kapazität auf und/oder die Ansteuerschaltung umfasst einen einstellbaren Widerstand und/oder die Ansteuerschaltung umfasst einen einstellbaren Spannungswandler, der elektrisch mit der Energiespeichereinheit gekoppelt ist, sodass eine Speicherspannung der Energiespeichereinheit einstellbar ist, und/oder das elektrische Schaltelement ist hinsichtlich seiner Betätigungszeit einstellbar. Alle diese Alternativen können genutzt werden, um einen Betätigungsstromparameter einzustellen. Das kann in Abhängigkeit des Umgebungsparameters und/oder des ersten Betriebsparameters und/oder des zweiten Betriebsparameters geschehen. Wie bereits erwähnt, beschreibt der Betätigungsstromparameter z. B. einen maximalen Betätigungsstrom oder eine Dauer der Bestromung. Mittels einer derartigen Ansteuerschaltung lässt sich also ein Betätigungselement, das eine Formgedächtnislegierung umfasst, in einer Weise ansteuern, die einerseits eine schnelle und zuverlässige Betätigung bewirkt und andererseits unerwünschte Alterungseffekte verhindert.

Der einstellbare Spannungswandler ist z. B. ein sogenannter Hochsetzsteller.

Die Ansteuerschaltung kann ferner eine Temperiervorrichtung umfassen, welche zum Temperieren des Betätigungselements mit dem Betätigungselement koppelbar ist. Mittels einer solchen Temperiervorrichtung lassen sich die bereits im Zusammenhang mit dem Verfahrensschritt des Temperierens erwähnten Effekte und Vorteile erzielen. Auf die obigen Ausführungen wird verwiesen.

Dabei kann die Temperiervorrichtung eine Messeinrichtung zur Messung einer Temperatur des Betätigungselements und/oder zur Messung eines elektrischen Widerstands des Betätigungselements umfassen. Der elektrische Widerstand kann dabei durch eine kombinierte Messung eines das Betätigungselement durchfließenden Stroms und eine über dem Betätigungselement abfallende Spannung gemessen werden. Somit lässt sich das Betätigungselement mittels eines geschlossenen Regelkreises temperieren. Dadurch wird eine besonders präzise Temperierung ermöglicht.

In einem Fall, in dem eine Temperatur-Widerstandskennlinie des Betätigungselements bekannt ist, lassen sich eine Temperatur und ein Widerstand ineinander umrechnen.

Zusätzlich wir die Aufgabe durch eine Aktuatoreinheit mit einer erfindungsgemäßen Ansteuerschaltung und einem Aktuator gelöst. Der Aktuator weist ein Betätigungselement auf, welches eine Formgedächtnislegierung umfasst. Der Aktuator ist elektrisch mit der Ansteuerschaltung gekoppelt. Das Betätigungselement kann somit gezielt mit einem Strom beaufschlagt werden, der ausreichend groß ist, um eine sichere und zuverlässige Betätigung des Aktuators zu bewirken. Insbesondere wird eine ausreichend schnelle Betätigung des Aktuators erreicht. Gleichzeitig ist der Strom jedoch so klein, dass eine übermäßige Alterung oder sogar eine Schädigung des Aktuators vermieden wird. Ein geringer Strom impliziert dabei eine geringe thermische Belastung der Formgedächtnislegierung. Dies führt zu einer verhältnismäßig langsamen Alterung. Eine derartige Aktuatoreinheit weist folglich eine hohe Zuverlässigkeit und eine hohe Lebensdauer auf. Insbesondere kann die Aktuatoreinheit mehrfach betätigt werden.

Bevorzugt hat das Betätigungselement die Form eines Drahtes. Aufgrund der Tatsache, dass das Betätigungselement eine Formgedächtnislegierung umfasst, verkürzt sich dieser Draht, wenn er auf eine Temperatur oberhalb einer Auslöseschwelle erwärmt wird. Eine derartige Auslöseschwelle kann auch als Schalttemperatur bezeichnet werden. Wenn der Draht wieder auf seine Umgebungstemperatur abgekühlt wird, wird die Verkürzung rückgängig gemacht.

Gemäß einer Variante ist das Betätigungselement gegenüber einer Umgebung thermisch isoliert. Nachdem das Betätigungselement die Formgedächtnislegierung umfasst, ist also auch die Formgedächtnislegierung thermisch gegenüber der Umgebung isoliert. Es lassen sich so Temperaturschwankungen der Formgedächtnislegierung dämpfen. Das verlangsamt eine unerwünschte Alterung der Formgedächtnislegierung.

Auch wird die Aufgabe durch eine Notbremseinheit für ein motorisch angetriebenes Werkzeug mit einer erfindungsgemäßen Aktuatoreinheit gelöst. Eine derartige Notbremseinheit verfügt über eine hohe Zuverlässigkeit und Lebensdauer. Insbesondere kann die Notbremseinheit mehrfach verwendet werden, wobei die Zuverlässigkeit über die gesamte Lebensdauer auf hohem Niveau gehalten werden kann.

Im Übrigen gelten die für eines aus erfindungsgemäßem Verfahren, erfindungsgemäßer Ansteuerschaltung, erfindungsgemäßer Aktuatoreinheit und erfindungsgemäßer Notbremseinheit genannten Effekte und Vorteile in gleicher Weise auch für alle anderen aus erfindungsgemäßem Verfahren, erfindungsgemäßer Ansteuerschaltung, erfindungsgemäßer Aktuatoreinheit und erfindungsgemäßer Notbremseinheit.

Die Erfindung wird nachstehend anhand verschiedener Ausführungsbeispiele erläutert, die in den beigefügten Zeichnungen gezeigt sind. Es zeigen:
- Figur 1: eine Sägevorrichtung mit einer Notbremseinheit, die mit einer Aktuatoreinheit ausgestattet ist, die eine erfindungsgemäße Ansteuerschaltung und einen Aktuator aufweist, der mittels eines Verfahrens betreibbar ist,
- Figur 2: die Sägevorrichtung aus Figur 1, wobei ein Gehäuseteil und eine Schutzabdeckung fortgelassen sind,
- Figur 3: einen Schnitt durch die Sägevorrichtung aus Figur 2 entlang der Ebene III,
- Figur 4: in einer der Figur 3 entsprechenden Ansicht eine alternative Ausführungsform der Notbremseinheit,
- Figur 5: in einer Ansicht entlang der Richtung V in Figur 2 die Notbremseinheit in einer isolierten Darstellung,
- Figur 6: in einer Figur 3 entsprechenden Ansicht eine weitere alternative Ausführungsform der Notbremseinheit,
- Figur 7: in einer Figur 3 entsprechenden Ansicht noch eine alternative Ausführungsform der Notbremseinheit,
- Figur 8: eine Ansicht einer Notbremseinheit gemäß einer anderen Ausführungsform,
- Figur 9: einen Schnitt durch die Notbremseinheit aus Figur 8 entlang der Ebene IX-IX,
- Figur 10: die erfindungsgemäße Aktuatoreinheit aus den Figuren 1 und 2 in Form eines elektrischen Schaltplans, wobei der Aktuator durch das Betätigungselement in Form eines Drahtes aus einer Formgedächtnislegierung repräsentiert ist,
- Figur 11: eine alternative Ausführungsform der erfindungsgemäßen Aktuatoreinheit in einer der Figur 6 entsprechenden Darstellung,
- Figur 12: eine weitere alternative Ausführungsform der erfindungsgemäßen Aktuatoreinheit in einer Darstellung wie in den Figuren 6 und 7, und
- Figur 13: noch eine alternative Ausführungsform der erfindungsgemäßen Aktuatoreinheit in einer Darstellung wie in den Figuren 6 bis 8.

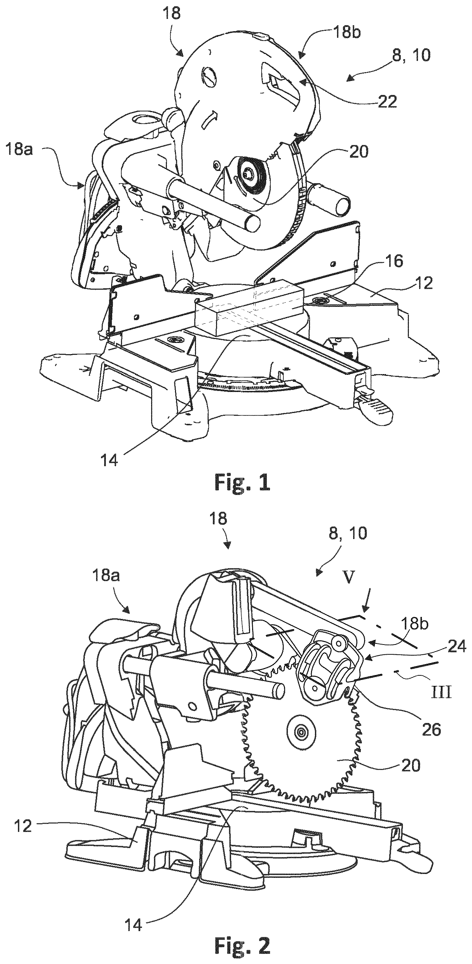

Die Figuren 1 und 2 zeigen ein motorisch angetriebenes Werkzeug 8, das im dargestellten Beispiel eine Sägevorrichtung 10, genauer gesagt eine Kappsäge, ist.

Die Sägevorrichtung 10 umfasst ein Basisteil 12, das eine Auflagefläche 14 für ein Werkstück 16 aufweist. Das Werkstück 16 ist als exemplarisch zu verstehen.

Ferner weist die Sägevorrichtung 10 eine Schwenkvorrichtung 18 auf, die an einem ersten Abschnitt 18a gelenkig am Basisteil 12 gelagert ist. An einem zweiten Abschnitt 18b, der vom ersten Abschnitt 18a beabstandet ist, ist ein scheibenförmiges Sägeblatt 20 gelagert. Ferner ist am zweiten Abschnitt 18b ein Griff 22 vorgesehen.

Ein Nutzer der Sägevorrichtung 10 kann somit mittels des Griffs 22 das Sägeblatt 20 in einem rotierenden Zustand in Wechselwirkung mit dem auf der Auflagefläche 14 gelagerten Werkstück 16 bringen, sodass dieses eingesägt oder abgesägt wird.

Die Sägevorrichtung 10, d.h. das motorisch angetriebene Werkzeug 8, ist ferner mit einer Notbremseinheit 24 ausgestattet.

Dabei ist die Notbremseinheit 24 dazu ausgebildet, das Sägeblatt 20 bis zum Stillstand abzubremsen, wenn in einem Zustand, in dem das Sägeblatt 20 rotiert, detektiert wird, dass ein Nutzer mit dem Sägeblatt 20 in Kontakt kommt oder ein solcher Kontakt droht.

In diesem Zusammenhang wird das Sägeblatt 20 als kapazitives Sensorelement verwendet, d.h. es wird laufend eine elektrische Kapazität des Sägeblatts 20 erfasst. Für den Fall, dass sich die elektrische Kapazität außerhalb eines vorgegebenen Normalbereichs befindet, wird ein Kontakt detektiert.

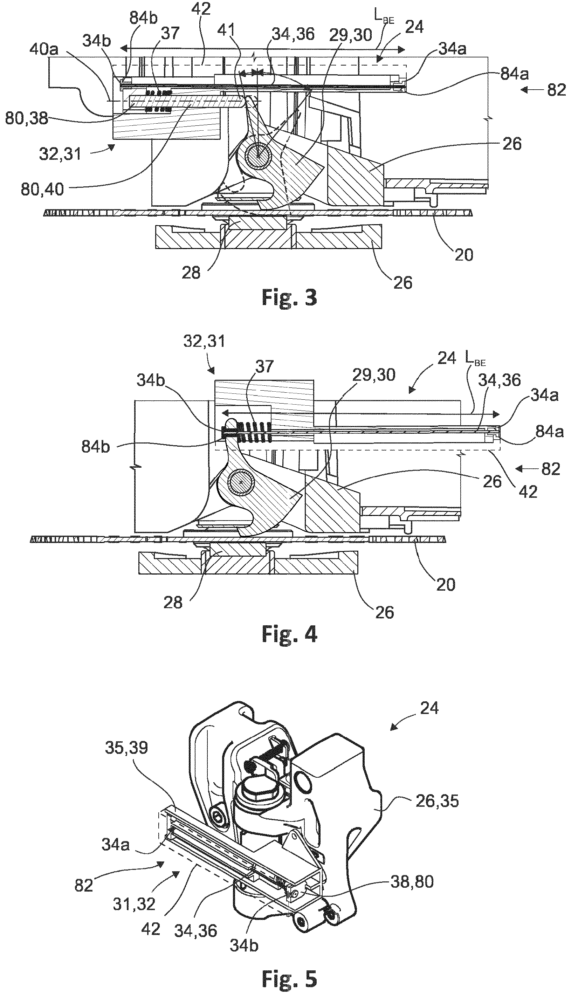

In den Figuren 3 bis 9 sind verschiedene Ausführungsformen der Notbremseinheit 24 zu sehen.

In diesem Zusammenhang weist die Notbremseinheit 24 einen Bremssattel 26 auf, der einen Rand des Sägeblatts 20 übergreift, sodass ein am Bremssattel 26 vorgesehenes Andrückelement 28 auf einer ersten axialen Seite des Sägeblatts 20 und ein am Bremssattel 26 drehbar gelagerter Bremsnocken 30 auf einer zweiten axialen Seite des Sägeblatts 20 angeordnet ist.

In allgemeinerer Form kann der Bremsnocken 30 auch als Bremselement 29 bezeichnet werden.

Der Bremsnocken 30 ist mit einer Aktuatoreinheit 32 gekoppelt, die einen Aktuator 31 und eine später noch zu erläuternde Ansteuerschaltung umfasst, die elektrisch mit dem Aktuator gekoppelt ist. Mittels des Aktuators 31 kann der Bremsnocken 30 wahlweise derart gedreht werden, dass er das Sägeblatt 20 gegen das Andrückelement 28 drückt und folglich bis zum Stillstand abbremst.

In der Variante aus Figur 3 umfasst der Aktuator 31 ein Betätigungselement 34, das eine Formgedächtnislegierung 36 umfasst. Im Speziellen ist das Betätigungselement 34 als ein Draht ausgebildet, der aus der Formgedächtnislegierung 36 hergestellt ist.

Das Betätigungselement 34 ist mit einem ersten Ende 34a an einer Befestigungselementaufnahme befestigt. Die Befestigungselementaufnahme kann Teil des Bremssattels 26 oder Teil einer am Bremssattel 26 festgelegten Haltestruktur 35 sein. Dabei kann die Haltestruktur 35 durch ein Aktuatorgehäuse 39 gebildet sein, das am Bremssattel 26 befestigt ist.

Selbstverständlich kann die Haltestruktur 35 auch durch den Bremssattel 26 oder durch den Bremssattel 26 und das Aktuatorgehäuse 39 zusammen gebildet sein.

Das andere Ende 34b des Betätigungselements 34 ist an einem Schlitten 38 befestigt, der translatorisch verschiebbar relativ zum Bremssattel 26 gelagert ist. Dabei ist der Schlitten 38 in einer Richtung federbeaufschlagt, die einer Zugbelastung des Betätigungselements 34 entspricht. Ferner ist der Schlitten 38 über einen Betätigungsstift 40 mit dem Bremsnocken 30 gekoppelt oder koppelbar.

Wird das Betätigungselement 34 mit einem elektrischen Strom von ausreichender Größe beaufschlagt, findet eine thermisch induzierte Gitterumwandlung der Formgedächtnislegierung 36 statt, die zur Folge hat, dass sich das Betätigungselement 34 verkürzt. Daraus resultiert eine Verschiebung des Schlittens 38 und des Betätigungsstifts 40 zur rechten Seite in Figur 3. Daraus resultierend wird der Bremsnocken 30 in Eingriff mit dem Sägeblatt 20 gebracht und bremst dieses bis zum Stillstand ab.

Zum besseren Verständnis sind dabei in Figur 3 der Betätigungsstift 40 und der Bremsnocken 30 mit durchgezogenen Linien in einem unbetätigten Zustand dargestellt. Der unbetätigte Zustand betrifft einen Zustand, in dem das Betätigungselement 34 noch nicht mit einem elektrischen Strom von ausreichender Größe beaufschlagt wurde. Der Bremsnocken 30 interagiert dementsprechend nicht mit dem Sägeblatt 20. Darüber hinaus sind der Betätigungsstift 40 und der Bremsnocken 30 mit gestrichelten Linien in einem betätigten Zustand dargestellt. In diesem Zustand wurde das Betätigungselement 34 mit einem elektrischen Strom von ausreichender Größe beaufschlagt, sodass sich in Figur 3 der Betätigungsstift 40 nach rechts verschoben hat und der Bremsnocken 30 im Uhrzeigersinn gedreht hat. Das Sägeblatt 20 ist somit zwischen dem Bremsnocken 30 und dem Andrückelement 28 eingeklemmt. Im betätigten Zustand sind der Betätigungsstift 40 und der Bremsnocken 30 voneinander getrennt, d.h. beabstandet.

Die Figur 4 zeigt eine alternative Ausführungsform der Aktuatoreinheit 32. Bei dieser ist das erste Ende 34a des Betätigungselements 34 wie gehabt relativ zum Bremssattel 26 festgelegt.

Im Unterschied zur Variante aus Figur 3 ist das zweite Ende 34b am Bremsnocken 30 befestigt. Dabei ist der Bremsnocken 30 federbelastet. Die Belastungsrichtung entspricht wieder einer Zugbelastungsrichtung für das Betätigungselement 34.

Wird in der Variante aus Figur 4 das Betätigungselement 34 mit einem elektrischen Strom von ausreichender Größe beaufschlagt, findet eine thermisch induzierte Gitterumwandlung der Formgedächtnislegierung 36 statt, die zur Folge hat, dass sich das Betätigungselement 34 verkürzt. Daraus resultiert eine Drehung des Bremsnockens 30, sodass dieser in Eingriff mit dem Sägeblatt 20 gebracht wird und dieses bis zum Stillstand abbremst. In der Figur 4 dreht sich der Bremsnocken 30 bei Auslösung der Notbremseinheit 24 im Uhrzeigersinn.

Der Aktuator 31 zum Betrieb der Notbremseinheit 24 weist also das Betätigungselement 34, welches eine Formgedächtnislegierung 36 umfasst, die Haltestruktur 35 und ein an der Haltestruktur 35 angeordnetes Federelement 37 auf, wobei das Federelement 37 das zweite Ende 34b des Betätigungselements 34 relativ zum ersten Ende 34a des Betätigungselements 34 vorspannt und/oder eine Vorzugslage des sich vorzugsweise entlang einer Stiftachse 40a erstreckenden Betätigungsstifts 40 relativ zur Haltestruktur 35 definiert.

Das Betätigungselement 34 erstreckt sich stets entlang einer Verkürzungsrichtung, die vom ersten Ende 34a des Betätigungselements 34 zum zweiten Ende 34b des Betätigungselements 34 verläuft.

In der in Figur 3 gezeigten Variante ist der Betätigungsstift 40 relativ zur Haltestruktur entlang der Stiftachse 40a translatorisch verschiebbar gelagert angeordnet. Der Betätigungsstift 40 ist in einem Durchgangsloch der Haltestruktur 35 gelagert.

Das Betätigungselement 34 ist mit seinem ersten Ende 34a an der Befestigungselementaufnahme der Haltestruktur 35 befestigt und mit seinem zweiten Ende 34b mit dem Bremsnocken 30 gekoppelt oder koppelbar.

In der in Figur 3 gezeigten Variante ist das zweite Ende 34b über den Betätigungsstift 40 mit dem Bremsnocken 30 gekoppelt oder koppelbar.

Bevorzugt verlaufen die Stiftachse 40a und die Verkürzungsrichtung des Betätigungselements 34 parallel.

Alternativ oder zusätzlich sind der Betätigungsstift 40 und das zweite Ende 34b des Betätigungselements 34 durch Auslösen der Notbremseinheit 24 parallel zueinander in die gleiche Richtung verlegbar.

Vorzugsweise handelt es sich dabei um eine lineare Bewegung.

In der in Figur 3 gezeigten Variante sind der Betätigungsstift 40 und das zweite Ende 34b des Betätigungselements 34 mittels des Schlittens 38 gekoppelt, so dass der Betätigungsstift 40 über den Schlitten 38 mit dem Bremsnocken 30 in Eingriff bringbar ist.

Der Schlitten 38 steht mit einer an der Haltestruktur 35 angeordneten Führungskontur in Eingriff. Auf diese Weise kann eine Verdrehung des Schlittens 38 relativ zur Haltestruktur vermieden werden. Alternativ kann es auch vorgesehen sein, dass der Betätigungsstift 40 mit einer an der Haltestruktur angeordneten Führungskontur in Eingriff steht.

In der in Figur 4 gezeigten Variante steht das zweite Ende 34b des Betätigungselements 34 direkt mit dem Bremsnocken 30 in Eingriff.

Das erste Ende 34a und das zweite Ende 34b des Betätigungselements 34 sind beispielsweise in Hülsen 84a, 84b aufgenommen. Die Hülsen 84a, 84b können am Betätigungselement 34, d.h. am Draht aus der Formgedächtnislegierung 36, verpresst oder gecrimpt sein. Somit kann der Draht auf einfache Art und Weise mit seinem ersten Ende 34a mit der Haltestruktur und mit seinem zweiten Ende 34b mit dem Schlitten 38 oder dem Bremsnocken 30 gekoppelt werden.

Alternativ ist es auch denkbar, dass das erste Ende 34a und das zweite Ende 34b des Betätigungselements 34, beispielsweise von einem elektrisch isolierenden Kunststoff, umspritzt sind, um beispielsweise eine Hülse 84a, 84b zu bilden. Anders gesagt sind gemäß dieser Alternative die Hülsen 84a, 84b an das jeweils zugeordnete erste Ende 34a oder zweite Ende 34b angespritzt.

Es ist jedoch auch denkbar, dass das zweite Ende 34b mit dem Schlitten 38 umspritzt ist und/oder in diesen eingebettet ist.

Alternativ oder zusätzlich kann das erste Ende 36a von der Haltestruktur umspritzt und/oder in diese eingebettet sein.

Das erste Ende 34a und das zweite Ende 34b des Betätigungselements 34 bilden vorzugsweise die elektrischen Anschlüsse des Betätigungselements 34. Beispielsweise sind Kabel direkt an das erste Ende 34a und das zweite Ende 34b angelötet, angecrimpt oder mittels Steckkontakten angesteckt.

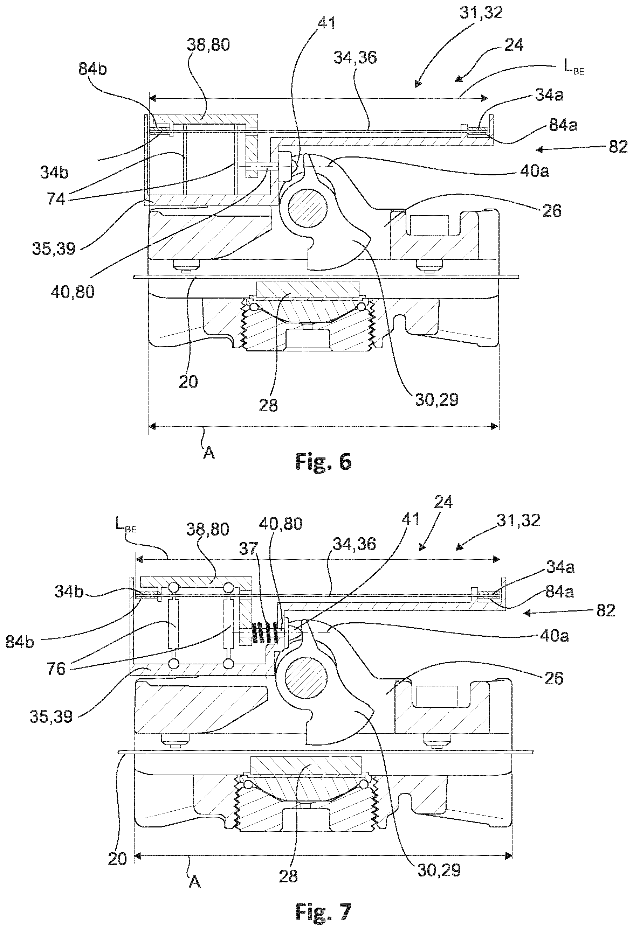

In der Variante aus Figur 6 umfasst der Aktuator 31 ebenfalls ein Betätigungselement 34, das eine Formgedächtnislegierung 36 umfasst. Im Speziellen ist das Betätigungselement 34, wie bisher, als ein Draht ausgebildet, der aus der Formgedächtnislegierung 36 hergestellt ist.

Das Betätigungselement 34 ist mit einem ersten Ende 34a an einer Befestigungselementaufnahme der Haltestruktur 35 befestigt, die im dargestellten Beispiel vom Aktuatorgehäuse 39 gebildet ist.

Das andere Ende 34b des Betätigungselements 34 ist an einem Schlitten 38 befestigt, der über zwei elastische Lagerelemente 74, die vorliegend jeweils als Blattfederelemente ausgeführt sind, bewegbar an der Haltestruktur 35, d.h. am Aktuatorgehäuse 39, gelagert ist.

Wie bereits erläutert, sind beide Enden 34a, 34b des Betätigungselements 34 mit angespritzten Hülsen 84a, 84b versehen.

In diesem Zusammenhang ist der Schlitten 38 im Wesentlichen L-förmig, wobei der relativ gesehen längere Schenkel des L-förmigen Schlittens 38 parallel zum Betätigungselement 34 ausgerichtet ist.

Die beiden elastischen Lagerelemente 74 sind mit dem relativ gesehen längeren Schenkel verbunden.

Der relativ gesehen kürzere Schenkel des L-förmigen Schlittens 38 ist im Wesentlichen rechtwinklig zum relativ gesehen längeren Schenkel ausgerichtet.

Dabei ist ein Betätigungsstift 40 mit einer Stiftachse 40a, genauer gesagt ein betätigungselementseitiges Ende des Betätigungsstifts 40, starr mit dem relativ gesehen kürzeren Schenkel verbunden. Der Betätigungsstift 40 weist dabei vom relativ gesehen längeren Schenkel weg und erstreckt sich durch eine Durchgangsöffnung hindurch, die an der Haltestruktur 35, d.h. am Aktuatorgehäuse 39 vorgesehen ist, sodass ein freies Ende des Betätigungsstiftes 40 benachbart zum Bremselement 29 liegt, das vorliegend die Form eines Bremsnockens 30 aufweist. Das bremselementseitige Ende 41 des Betätigungsstifts 40 kann somit am Bremselement 29, d.h. am Bremsnocken 30, anliegen oder bei Betätigung des Betätigungselements 34 ans Bremselement 29, d.h. an den Bremsnocken 30, angelegt werden.

Eine Zugkopplung besteht dabei zwischen dem Betätigungsstift 40 und dem Bremselement 29, d.h. dem Bremsnocken 30, nicht. Das bedeutet, dass mittels des Betätigungsstifts keine Zugkräfte in das Bremselement 29 eingeleitet werden können. Das gilt übrigens auch für die Ausführungsform aus Figur 3.

Das freie Ende des Betätigungsstifts 40, d.h. das bremselementseitige Ende 41 des Betätigungsstifts 40, ist dabei abgerundet.

Die Durchgangsöffnung, durch die sich der Betätigungsstift 40 erstreckt, dient dabei der Führung des Betätigungsstifts 40.

Ferner ist im Bereich des bremselementseitigen Endes 41 des Betätigungsstifts 40 ein Anschlagring befestigt, mittels dem eine Bewegung des bremselementseitigen Endes 41 des Betätigungsstifts 40 in Richtung zur Haltestruktur 35, d.h. in Richtung zum Aktuatorgehäuse 39, limitiert ist.

Eine Mittelachse des Betätigungsstifts 40, d.h. eine Stiftachse 40a verläuft dabei parallel-versetzt zum Betätigungselement 34.

Wird das Betätigungselement 34 mit einem elektrischen Strom von ausreichender Größe beaufschlagt, findet eine thermisch induzierte Gitterumwandlung der Formgedächtnislegierung 36 statt, die zur Folge hat, dass sich das Betätigungselement 34 verkürzt. Daraus resultiert eine Verschiebung des Schlittens 38 und des Betätigungsstifts 40 zur rechten Seite in Figur 6. Daraus resultierend wird der Bremsnocken 30 in Eingriff mit dem Sägeblatt 20 gebracht und bremst dieses bis zum Stillstand ab.

Diese Bewegung des Schlittens 38 ist durch eine mögliche Anlage des relativ gesehen kürzeren Schenkels des Schlittens 38 an der Haltestruktur 35, d.h. am Aktuatorgehäuse 39, begrenzt.

Sofern das Betätigungselement 34 nicht mehr mit einem Strom beaufschlag wird und dementsprechend abkühlt, kehrt sich die zuvor thermisch induzierte Gitterumwandlung wieder um und das Betätigungselement 34 längt sich wieder in seine Ausgangslänge.

Dabei ist der Schlitten 38 durch die elastischen Lagerelemente 74 stets in einer Richtung federbeaufschlagt, die einer Zugbelastung des Betätigungselements 34 entspricht. Auf diese Weise wird der Schlitten 38 zuverlässig in seine Ausgangsposition zurückgestellt.

Zusammengefasst ist also in der Ausführungsform gemäß Figur 6 das zweite Ende 34b des Betätigungselements 34 über den Schlitten 38 und den Betätigungsstift 40 antriebsmäßig mit dem Bremselement 29, d.h. dem Bremsnocken 30, gekoppelt.

Im Sinne eines kompakten Aufbaus ist dabei das bremselementseitige Ende 41 des Betätigungsstifts 40 entlang einer Richtung parallel zum Betätigungselement 34 zwischen dem ersten Ende 34a des Betätigungselements 34 und dem zweiten Ende 34b des Betätigungselements 34 angeordnet. Das wird aus der Ansicht der Figur 6 unmittelbar deutlich, wenn man gedanklich an jedem Ende 34a, 34b eine senkrechte Linie zum Betätigungselement 34 einzeichnet, die die Stiftachse 40a schneidet. Das bremselementseitige Ende 41 des Betätigungsstifts 40 liegt dann zwischen diesen beiden Schnittpunkten.

Darüber hinaus ist eine Länge L_{BE} des Betätigungselements 34 in der Ausführungsform gemäß Figur 6 kleiner als eine Abmessung A der Notbremseinheit 24 entlang einer Richtung parallel zur Länge L_{BE} des Betätigungselements 34. Außerdem liegt die Länge L_{BE} des Betätigungselements vollständig innerhalb einer parallel zur Länge L_{BE} des Betätigungselements 34 gemessenen Abmessung A der Notbremseinheit 24. Die Abmessung A, die auch als Maximalabmessung bezeichnet werden kann, ist dabei durch eine Abmessung des Bremssattels 26 gebildet, die parallel zum Betätigungselement gemessen wird. Es ist anhand der Figur 6 direkt erkennbar, dass das Betätigungselement 34 kürzer als diese Abmessung A ist. Werden jeweils am Anfang und am Ende der Abmessung A des Bremssattels 26 in der Figur 6 von oben nach unten verlaufende senkrechte Linien eingezeichnet, so liegt das Betätigungselement 34 zwischen diesen Linien.

Figur 7 zeigt eine weitere Ausführungsform, die der Ausführungsform aus Figur 6 ähnelt. Es werden daher im Folgenden lediglich die Unterschiede gegenüber der Ausführungsform aus Figur 6 erläutert. Im Übrigen kann auf die Erläuterungen zur Ausführungsform gemäß Figur 6 verwiesen werden.

Ein erster Unterschied der Ausführungsform gemäß Figur 7 und der Ausführungsform gemäß Figur 6 besteht darin, dass der Schlitten 38 mittels zweier Gelenkarme 76 bewegbar an der Haltestruktur 35, d.h. am Aktuatorgehäuse 39, gelagert ist.

Dabei sind die Gelenkarme 76 an sich starr. Diese sind jedoch über jeweils ein erstes Drehgelenk mit dem Schlitten 38 und über jeweils ein zweites Drehgelenk mit der Haltestruktur 35 verbunden.

Ein zweiter Unterschied besteht darin, dass nunmehr wieder ein Federelement 37 vorgesehen ist. Dabei ist das Federelement 37 zwischen dem relativ gesehen kürzeren Schenkel des L-förmigen Schlittens 38 und einem diesem Schenkel gegenüberliegenden Abschnitt der Haltestruktur 35, d.h. des Aktuatorgehäuses 39, angeordnet.

Der Schlitten 38 ist also durch das Federelement 37 stets in einer Richtung federbeaufschlagt, die einer Zugbelastung des Betätigungselements 34 entspricht. Auf diese Weise wird der Schlitten 38 zuverlässig in seine Ausgangsposition zurückgestellt, wenn das Betätigungselement 34 nicht mehr mit einem Strom beaufschlag wird.

Ferner umgibt das Federelement 37, das als Spiralfeder ausgeführt ist, den Betätigungsstift 40 umfangsmäßig.

Das Federelement 37 und der Betätigungsstift 40 sind zudem koaxial angeordnet.

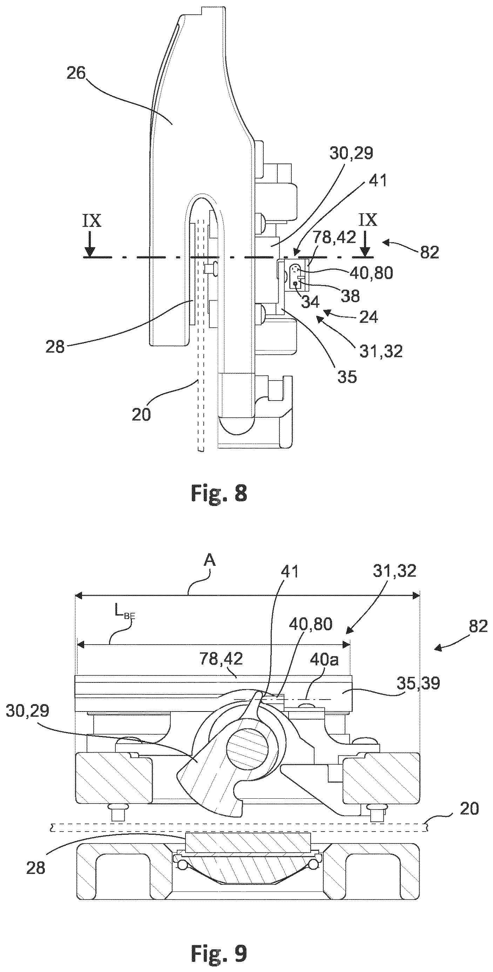

Eine weitere Ausführungsform einer Notbremseinheit 24 ist in den Figuren 8 und 9 gezeigt. Dabei zeigt die Figur 8 unter anderem einen Bremssattel 26 der Notbremseinheit 24 in einer Ansicht entlang einer Richtung, die innerhalb einer Sägeblattebene des Sägeblatts 20 liegt. Die Position des Sägeblatts 20 ist dabei mit gestrichelten Linien angedeutet.

Figur 9 zeigt eine zugehörige Schnittansicht in einer Ebene IX-IX.

In der Ausführungsform gemäß Figuren 8 und 9 sind das Betätigungselement 34 und ein Schlitten 38, an dem das zweite Ende 34b des Betätigungselements 34 befestigt ist, auf einer gemeinsamen Trägerplatte 78 angeordnet, die beispielsweise als Platine ausgeführt ist.

Auf der Trägerplatte 78 ist auch eine Ansteuerschaltung 42 vorgesehen, die nachfolgend noch im Detail erläutert werden wird. Die Trägerplatte 78 mit der Ansteuerschaltung 42 kann als Ansteuereinheit bezeichnet werden.

Dabei lässt sich wie gehabt der Bremsnocken 30 mittels eines starr am Schlitten 38 angebrachten Betätigungsstifts 40 betätigen.

Dabei sind die Trägerplatte 78 und das Betätigungselement 34 derart positioniert, dass sie einen Antriebskoppelabschnitt des Bremselements 29, d.h. einen Bereich des Bremsnockens 30, der zur Anlage des Betätigungsstifts 40 ausgebildet ist, mechanisch abschirmen. Das wird insbesondere anhand der Ansicht aus Figur 9 deutlich.

In dieser Ansicht kann ein menschlicher Finger oder eine menschliche Hand von oben nicht zum Antriebskoppelabschnitt gelangen, da der Zugang durch die Trägerplatte 78 und das Betätigungselement 34 blockiert ist. Gleiches gilt für Fremdkörper, z. B. Schmutzpartikel.

Wie bereits im Zusammenhang mit der Ausführungsform aus Figur 6 erläutert, ist auch in der Ausführungsform gemäß Figuren 8 und 9 eine Länge L_{BE} des Betätigungselements 34 kleiner als eine Abmessung A der Notbremseinheit 24 entlang einer Richtung parallel zur Länge L_{BE} des Betätigungselements 34. Außerdem liegt die Länge L_{BE} des Betätigungselements 34 vollständig innerhalb einer parallel zur Länge L_{BE} des Betätigungselements 34 gemessenen Abmessung A der Notbremseinheit 24.

In allen zuvor erläuterten Varianten können der Schlitten 38 und der Betätigungsstift 40 allgemeiner als Zwischenelemente 80 bezeichnet werden.

Ein anderer Begriff für den Betätigungsstift 40 ist Stößel.

Ferner kann in den vorstehend beschriebenen Beispielen eine Kombination aus Aktuator 31 und Bremselement 29, d.h. Bremsnocken 30, als Notbremsbaugruppe 82 bezeichnet werden. Die Notbremsbaugruppe 82 stellt somit eine Untereinheit der Notbremseinheit 24 dar, wobei die Notbremseinheit 24, wie bereits erläutert, dazu ausgebildet, das Sägeblatt 20 bis zum Stillstand abzubremsen.

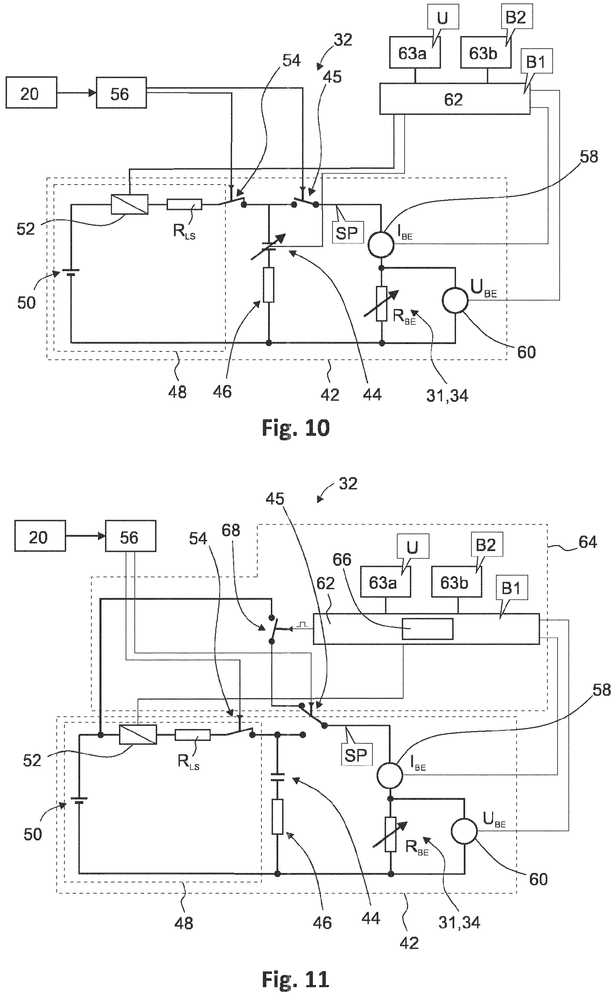

Die Figur 10 zeigt eine Ausführungsform der Aktuatoreinheit 32 in Form eines elektrischen Schaltplans.

Dabei ist das Betätigungselement 34 des Aktuators 31 durch einen veränderlichen Widerstand R_{BE} repräsentiert.

Der Aktuator 31, d.h. das Betätigungselement 34, ist elektrisch mit einer Ansteuerschaltung 42 verbunden, die dazu ausgebildet ist, das Betätigungselement 34 selektiv mit elektrischer Energie zu beaufschlagen, sodass die oben erwähnte Gefügeumwandlung induziert wird.

Hierzu umfasst die Ansteuerschaltung 42 eine elektrische Energiespeichereinheit 44 in Form eines Kondensators mit einstellbarer Kapazität.

Ferner weist die Ansteuerschaltung 42 ein elektrisches Schaltelement 45 auf, mittels dem die Energiespeichereinheit 44 und das Betätigungselement 34 wahlweise elektrisch gekoppelt werden können. Die elektrische Kopplung erfolgt dabei über einen optional vorhandenen Widerstand 46.

Die Ansteuerschaltung 42 umfasst auch eine Ladeschaltung 48 für die Energiespeichereinheit 44. Diese weist eine Gleichspannungsquelle 50 auf, die über einen einstellbaren Spannungswandler 52 und ein weiteres elektrisches Schaltelement 54 mit der Energiespeichereinheit 44 gekoppelt ist. Ein elektrischer Widerstand der Ladeschaltung 48 ist durch den Widerstand R_{LS} angegeben.

Sowohl das elektrische Schaltelement 45 als auch das weitere elektrische Schaltelement 54 werden mittels einer Auslösesteuereinheit 56 betätigt, die mit dem als Sensorelement wirkenden Sägeblatt 20 gekoppelt ist.

Dabei ist in einem Ausgangszustand das elektrische Schaltelement 45 geöffnet, d.h. das Betätigungselement 34 ist elektrisch von der Energiespeichereinheit 44 getrennt. Das weitere Schaltelement 54 ist geschlossen, sodass die Energiespeichereinheit 44 mittels der Gleichspannungsquelle 50 auf einen gewünschten Ladezustand gebracht oder dort gehalten wird.

Wenn die Auslösesteuereinheit 56 einen tatsächlichen oder drohenden Kontakt des Nutzers mit dem Sägeblatt 20 detektiert, wird das elektrische Schaltelement 45 geschlossen und das weitere elektrische Schaltelement 54 geöffnet. Somit wird die Energiespeichereinheit 44 elektrisch mit dem Betätigungselement 34 verbunden, sodass ein elektrischer Strom durch das Betätigungselement 34 geleitet wird, der eine Gefügeumwandlung der Formgedächtnislegierung 36 induziert.

In der Ausführungsform aus Figur 10 kann dies in Abhängigkeit eines ersten Betriebsparameters B1 des Aktuators 31 erfolgen. Im dargestellten Ausführungsbeispiel handelt es sich dabei um einen elektrischen Widerstand oder eine Temperatur. Nachdem das Betätigungselement 34 einen charakteristischen, temperaturabhängigen elektrischen Widerstand aufweist, sind der elektrische Widerstand und die Temperatur ineinander umrechenbar. Der Verlauf des elektrischen Widerstands des Betätigungselements 34 über der Temperatur kann dabei als bekannt vorausgesetzt werden.

Zu diesem Zweck umfasst die Ansteuerschaltung 42 eine Strommesseinheit 58, die einen Strom I_{BE} misst, der durch das Betätigungselement 34 fließt, und eine Spannungsmesseinheit 60, die eine über dem Betätigungselement abfallende Spannung U_{BE} misst.

Sowohl die Strommesseinheit 58 als auch die Spannungsmesseinheit 60 sind mit einer Zustandssteuereinheit 62 signaltechnisch gekoppelt. Mittels der Zustandssteuereinheit 62 kann anhand der Spannung U_{BE} und des Stroms I_{BE} ein elektrischer Widerstand des Betätigungselements 34 errechnet werden. Über den bekannten Zusammenhang zwischen dem elektrischen Widerstand und der Temperatur lässt sich zudem die Temperatur des Betätigungselements 34 bestimmen.

Die Zustandssteuereinheit 62 ist ferner signaltechnisch mit dem Spannungswandler 52 gekoppelt. Somit ist es möglich, in Abhängigkeit des Widerstands oder der Temperatur des Betätigungselements 34 eine Spannung einzustellen, die sich auf den einstellbaren Widerstand 46 und die Energiespeichereinheit 44 aufteilt. Mit anderen Worten kann eine Speicherspannung der Energiespeichereinheit 44 eingestellt werden.

Es versteht sich dabei, dass Strom durch das Betätigungselement 34 fließen muss, damit dessen elektrischer Widerstand und/oder dessen Temperatur mittels der Strommesseinheit 58 und der Spannungsmesseinheit 60 ermittelt werden kann. Das bedeutet, dass der Widerstand und/oder die Temperatur während einer Betätigung des Betätigungselements 34 gemessen werden kann.

Alternativ oder zusätzlich kann mittels der Auslösesteuereinheit 56 ein Messverfahren ausgeführt werden, bei dem lediglich zum Messen des Widerstands und/oder der Temperatur das Betätigungselement 34 vorübergehend bestromt wird.

Die Zustandssteuereinheit 62 ist ferner mit einem Umgebungssensor 63a signaltechnisch gekoppelt, mittels dem ein Umgebungsparameter U erfasst werden kann. Im dargestellten Beispiel ist der Umgebungsparameter U eine Umgebungstemperatur. Der Spannungswandler 52 und/oder die Energiespeichereinheit 44 können bzw. kann also auch in Abhängigkeit der Umgebungstemperatur betrieben und/oder eingestellt werden.

Zusätzlich ist die Zustandssteuereinheit 62 mit einem Werkzeugzustandssensor 63b signaltechnisch gekoppelt. Dieser ist dazu ausgebildet, einen zweiten Betriebsparameter B2 des mit dem Aktuator 31 ausgestatteten Werkzeugs 8 zu ermitteln. Im vorliegenden Beispiel handelt es sich dabei um einen Drehzahlsensor, der eine Drehzahl des Werkzeugs 8 misst. Der Spannungswandler 52 und/oder die Energiespeichereinheit 44 können bzw. kann also auch in Abhängigkeit der Drehzahl betrieben und/oder eingestellt werden.

Figur 11 zeigt eine alternative Ausführungsform der Aktuatoreinheit 32 in Form eines elektrischen Schaltplans. Dabei wird im Folgenden lediglich auf die Unterschiede zur Ausführungsform gemäß Figur 10 eingegangen. Gleiche oder einander entsprechende Elemente werden mit denselben Bezugszeichen versehen.

Zunächst ist in der Ausführungsform gemäß Figur 11 die Energiespeichereinheit 44 nicht mehr einstellbar, sondern weist eine konstante Speicherkapazität auf.

Der elektrische Widerstand 46 ist wieder optional.

Darüber hinaus ist nun eine Heizschaltung oder Temperiervorrichtung 64 vorgesehen.

In diesem Zusammenhang ist das elektrische Schaltelement 45 derart modifiziert, dass es in einer ersten Stellung wie gehabt, die Energiespeichereinheit 44 elektrisch leitend mit dem Betätigungselement 34 verbindet.

In einer zweiten Stellung verbindet das elektrische Schaltelement 45 das Betätigungselement 34 mit der Heizschaltung oder Temperiervorrichtung 64, sodass ein Heizstrom durch das Betätigungselement 34 geleitet werden kann, um dieses auf eine gewünschte Temperatur zu erwärmen.

In der Ausführungsform gemäß Figur 11 umfasst ferner die Zustandssteuereinheit 62 einen Heizregler 66.

Der Heizregler 66 nutzt den mittels der Strommesseinheit 58 ermittelten Strom I_{BE} und die mittels der Spannungsmesseinheit 60 ermittelte Spannung U_{BE} als Eingangsparameter.

Die Strommesseinheit 58 und die Spannungsmesseinheit 60 bilden somit eine Messeinrichtung der Temperiervorrichtung 64, mittels der eine Temperatur des Betätigungselement 34 und/oder ein elektrischer Widerstand des Betätigungselements 34 gemessen werden kann.

Wie bereits erwähnt, kann daraus ein elektrischer Widerstand des Betätigungselements 34 errechnet werden oder, unter Zuhilfenahme des bekannten Zusammenhangs zwischen Temperatur und elektrischem Widerstand, eine Temperatur des Betätigungselements 34.

Somit lässt sich der Heizregler 66 mit einer Temperatur als Führungsgröße oder mit einem elektrischen Widerstand als Führungsgröße betreiben.

Mittels des Heizreglers 66 wird hierzu ein zusätzliches elektrisches Schaltelement 68 angesteuert, z. B. mit einem pulsweitenmodulierten Signal.

Die Einstellung des Spannungswandlers 52 erfolgt wie gehabt.

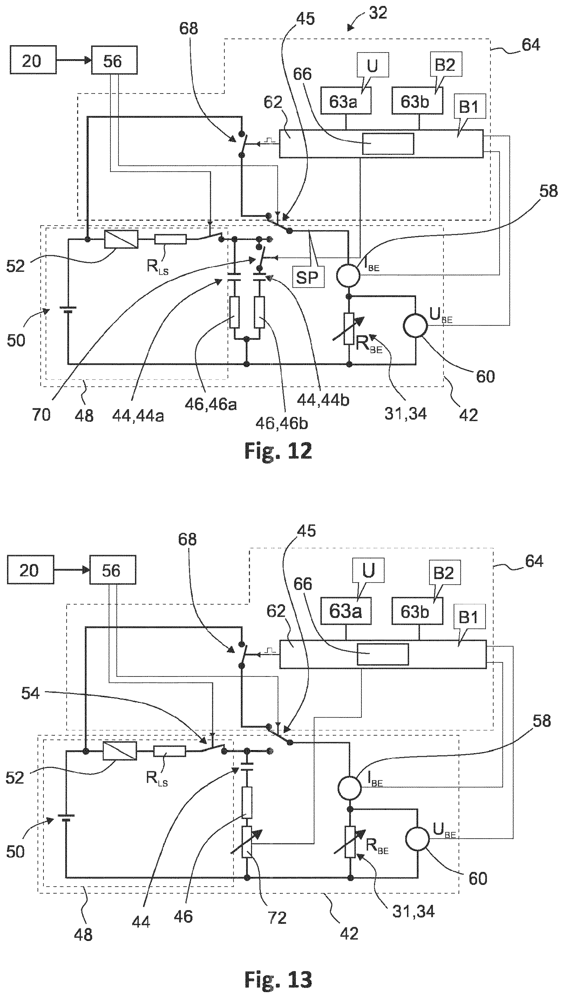

Figur 12 zeigt eine weitere, alternative Ausführungsform der Aktuatoreinheit 32 in Form eines elektrischen Schaltplans. Dabei wird im Folgenden lediglich auf die Unterschiede zu den Ausführungsformen gemäß Figur 10 und Figur 11 eingegangen. Gleiche oder einander entsprechende Elemente werden mit denselben Bezugszeichen versehen.

Im Unterschied zur Ausführungsform gemäß Figur 11 ist in der Ausführungsform gemäß Figur 12 der Spannungswandler 52 nicht mehr einstellbar. Das bedeutet, dass der Spannungswandler 52 die Spannung der Energiespeichereinheit 44, die vorliegend durch die Energiespeicherelemente 44a, 44b gebildet ist, stets auf einen festen Wert einstellt.

Die Energiespeichereinheit 44 umfasst nunmehr also zwei Energiespeicherelemente 44a, 44b, die jeweils als elektrische Kondensatoren ausgebildet sind.

Diese sind elektrisch parallelgeschaltet.

Darüber hinaus sind anstelle nur eines optionalen elektrischen Widerstands 46 nunmehr zwei optionale elektrische Widerstände 46a, 46b vorgesehen, die jeweils parallel zueinander und in Reihe zu einer der Energiespeicherelemente 44a, 44b geschaltet sind.

Dabei sind das Energiespeicherelement 44a und der elektrische Widerstand 46a wie gehabt über das elektrische Schaltelement 54 mit der Gleichspannungsquelle 50 koppelbar.

Das Energiespeicherelement 44b und der elektrische Widerstand 46b können mittels eines zusätzlichen elektrischen Schaltelements 70 wahlweise eingekoppelt werden, d.h. das Energiespeicherelement 44b und der elektrische Widerstand 46b sind nur dann mit der Gleichspannungsquelle 50 verbunden, wenn sowohl das elektrische Schaltelement 54 als auch das elektrische Schaltelement 70 geschlossen sind.

Dabei wird das elektrische Schaltelement 70 mittels der Zustandssteuereinheit 62 geschaltet.

Es können somit in Abhängigkeit eines elektrischen Widerstands und/oder einer Temperatur des Betätigungselements 34, das Energiespeicherelement 44b und der elektrische Widerstand 46b genutzt werden.

Ferner können das Energiespeicherelement 44b und der elektrische Widerstand 46b in Abhängigkeit eines mittels des Umgebungssensors 63a ermittelten Umgebungsparameters U und/oder in Abhängigkeit eines mittels des Maschinenzustandssensors 63b ermittelten zweiten Betriebsparameters B2 genutzt werden

Figur 13 zeigt eine zusätzliche, alternative Ausführungsform der Aktuatoreinheit 32 in Form eines elektrischen Schaltplans. Dabei wird im Folgenden lediglich auf die Unterschiede zu den vorgenannten Ausführungsformen eingegangen. Gleiche oder einander entsprechende Elemente werden mit denselben Bezugszeichen versehen.

Im Unterschied zur Ausführungsform gemäß Figur 11 ist in der Ausführungsform gemäß Figur 13 der Spannungswandler 52 nicht mehr einstellbar. Das bedeutet, dass der Spannungswandler 52 die Spannung der Energiespeichereinheit 44 stets auf einen festen Wert einstellt.

Ein weiterer Unterschied besteht darin, dass in Reihe zum elektrischen Widerstand 46 ein einstellbarer elektrischer Widerstand 72 vorgesehen ist. Dieser wird mittels der Zustandssteuereinheit 62 eingestellt.

Das kann, wie zuvor, in Abhängigkeit eines mittels des Umgebungssensors 63a ermittelten Umgebungsparameters U und/oder in Abhängigkeit eines mittels der Strommesseinheit 58 und der Spannungsmesseinheit 60 ermittelten Widerstands und/oder in Abhängigkeit einer mittels der Strommesseinheit 58 und der Spannungsmesseinheit 60 ermittelten Temperatur und/oder in Abhängigkeit eines mittels des Maschinenzustandssensors 63b ermittelten zweiten Betriebsparameters B2 erfolgen.

Zusammenfassend zeichnen sich die Ausführungsformen gemäß Figuren 10 und 12 durch eine Energiespeichereinheit 44 mit einstellbarer Kapazität aus.

Die Ansteuerschaltungen 42 gemäß Figuren 12 und 13 haben ferner einen einstellbaren elektrischen Widerstand 46, 46a, 46b, 72.

Außerdem ist bei den Ansteuerschaltungen 42 gemäß Figuren 10 und 13 der Spannungswandler 52 einstellbar, sodass eine Speicherspannung der Energiespeichereinheit 44 einstellbar ist.

In allen Ansteuerschaltungen 42 ist darüber hinaus das elektrische Schaltelement 45 hinsichtlich seiner Betätigungszeit einstellbar.

In allen vorgenannten Ausführungsformen kann der Aktuator 31 mittels eines Verfahrens zum Betrieb eines Aktuators einer Notbremseinheit betrieben werden.

Dabei wird mittels des Umgebungssensors 63a ein Umgebungsparameter U, hier die Umgebungstemperatur, erfasst.

Zudem wird in allen vorgenannten Ausführungsformen mittels der Strommesseinheit 58 und der Spannungsmesseinheit 60 ein elektrischer Widerstand und/oder eine Temperatur des Betätigungselements 34 erfasst. Diese können zusammenfassend als erster Betriebsparameter B1 des Aktuators 31 bezeichnet werden.

Auch ist in allen Ausführungsformen vorgesehen, dass mittels des Maschinenzustandssensors 63b ein zweiter Betriebsparameter B2 des mit dem Aktuator 31 ausgestatteten Werkzeugs 8 erfasst wird, hier die Drehzahl.

Darauf aufbauend wird in allen Ausführungsformen der Aktuator 31 in Abhängigkeit des Umgebungsparameters U, des ersten Betriebsparameters B1 und des zweiten Betriebsparameters B2 betrieben. Das bedeutet, dass ein Betätigungsstromparameter SP für das Betätigungselement 34 in Abhängigkeit des Umgebungsparameters U, des ersten Betriebsparameters B1 und des zweiten Betriebsparameters B2 eingestellt wird.

In den Ausführungsformen gemäß Figuren 12 und 13 wird hierzu der zwischen der Energiespeichereinheit 44 und dem Betätigungselement 34 wirkende elektrischer Widerstand in Abhängigkeit des Umgebungsparameters U, des ersten Betriebsparameters B1 und des zweiten Betriebsparameters B2 eingestellt.

In den Ausführungsformen gemäß Figuren 10 und 12 wird zu diesem Zweck die Kapazität der Energiespeichereinheit 44 in Abhängigkeit des Umgebungsparameters U, des ersten Betriebsparameters B1 und des zweiten Betriebsparameters B2 eingestellt.

In den Ausführungsformen gemäß Figuren 10 und 11 wird ferner über den einstellbaren Spannungswandler 52 die Speicherspannung der Energiespeichereinheit 44 in Abhängigkeit des Umgebungsparameters U, des ersten Betriebsparameters B1 und des zweiten Betriebsparameters B2 eingestellt.

Darüber hinaus wird in allen Ausführungsformen der Betätigungsstromparameter SP eingestellt, indem eine Betätigungszeit des Schaltelements 54 in Abhängigkeit des Umgebungsparameters U, des ersten Betriebsparameters B1 und des zweiten Betriebsparameters B2 eingestellt wird.

Zudem wird in den Ausführungsformen gemäß Figuren 11, 12 und 13 das Betätigungselement 34 mittels der Temperiervorrichtung 64 auf eine Temperatur oberhalb einer aktuellen Umgebungstemperatur und unterhalb einer Schalttemperatur des Betätigungselements 34 temperiert.

Vorliegend wurde angegeben, dass der Betätigungsstromparameter SP in Abhängigkeit des Umgebungsparameters U, des ersten Betriebsparameters B1 und des zweiten Betriebsparameters B2 eingestellt wird. Es versteht sich jedoch, dass auch nur einer oder ein Paar dieser Parameter genutzt werden kann.

In allen vorstehenden Ausführungsbeispielen lässt sich die Notbremseinheit 24 oder Notbremsbaugruppe 82 wie folgt betreiben.

In einem ersten Schritt wird das Bremselement 29, vorliegend der Bremsnocken 30, mittels des Betätigungselements 34 in Bewegung gesetzt. Hierzu wird das Betätigungselement 34 durch entsprechende Bestromung verkürzt. Wie bereits erläutert, wird dadurch der Bremsnocken 30 in den Ausführungsformen gemäß Figuren 3 und 6 bis 9 durch den Betätigungsstift 40 mit einer Druckkraft beaufschlagt. In der Ausführungsform gemäß Figur 4 ist das zweite Ende 34b des Betätigungselements 34 direkt am Bremsnocken 30 befestigt und beaufschlagt diesen mit einer Zugkraft.

Dadurch gelangt in allen Ausführungsformen der Bremsnocken 30 in Kontakt mit dem Sägeblatt 20. Nachdem die Notbremsbaugruppe 82 oder Notbremseinheit 24 vorliegend selbstverstärkend ausgeführt ist, wird der Bremsnocken 30 aufgrund des Kontakts vom Sägeblatt 20 mitgenommen. Das führt dazu, dass der Bremsnocken 30 das Sägeblatt 20 mit einer größer werdenden Kraft gegen das Andrückelement 28 drückt, bis das Sägeblatt 20 stillsteht.

In diesem Zusammenhang wird nach dem initialen in Bewegung setzen des Bremsnockens 30 eine Bewegungskopplung zwischen Betätigungselement 34 und Bremselement 29, d.h. Bremsnocken 30, beendet oder aufgehoben. Das erfolgt in den Ausführungsformen gemäß Figuren 3 und 6 bis 9 dadurch, dass das bremselementseitige Ende 41 des Betätigungsstifts 40 vom Bremselement 29, d.h. vom Bremsnocken 30 abhebt. In der Ausführungsform gemäß Figur 4 erfolgt das dadurch, dass sich der Bremsnocken 30 derart weit bewegt, dass das Betätigungselement 34 nicht mehr unter mechanischer Spannung steht und dementsprechend keine Zugkraft mehr ins Bremselement 29, d.h. den Bremsnocken 30, einbringen kann.

Das hat zur Folge, dass das Betätigungselement 34 nach entsprechender Abkühlung in eine Ausgangsstellung, d.h. in seine unbetätigte Stellung zurückgestellt werden kann. Hierfür wird die thermisch induzierte Gefügeumwandlung rückgängig gemacht. Das Rückstellen erfolgt unabhängig vom Bremselement 29, d.h. vom Bremsnocken 30, der separat vom Betätigungselement 34 zurückgestellt werden kann.

Die vorstehenden Erläuterungen betreffen eine Sägevorrichtung 10 in Form einer Kappsäge. Es versteht sich jedoch, dass die Ausbildung als Kappsäge nur ein Beispiel ist und die vorstehenden Ausführungen auch für Sägevorrichtungen anderer Bauart Gültigkeit haben, z. B. für Bandsägen.

### Bezugszeichenliste

- 8: motorisch angetriebenes Werkzeug
- 10: Sägevorrichtung
- 12: Basisteil
- 14: Auflagefläche
- 16: Werkstück
- 18: Schwenkvorrichtung
- 18a: erster Abschnitt
- 18b: zweiter Abschnitt
- 20: Sägeblatt
- 22: Griff
- 24: Notbremseinheit
- 26: Bremssattel
- 28: Andrückelement
- 29: Bremselement
- 30: Bremsnocken
- 31: Aktuator
- 32: Aktuatoreinheit
- 34: Betätigungselement
- 34a: erstes Ende
- 34b: zweites Ende
- 35: Haltestruktur
- 36: Formgedächtnislegierung
- 37: Federelement
- 38: Schlitten
- 39: Aktuatorgehäuse
- 40: Betätigungsstift
- 40a: Stiftachse
- 41: bremselementseitiges Ende des Betätigungsstifts
- 42: Ansteuerschaltung
- 44: elektrische Energiespeichereinheit
- 44a: elektrisches Energiespeicherelement
- 44b: elektrisches Energiespeicherelement
- 45: elektrisches Schaltelement
- 46: elektrischer Widerstand
- 46a: elektrischer Widerstand
- 46b: elektrischer Widerstand
- 48: Ladeschaltung
- 50: Gleichspannungsquelle
- 52: Spannungswandler
- 54: weiteres elektrisches Schaltelement
- 56: Auslösesteuereinheit
- 58: Strommesseinheit
- 60: Spannungsmesseinheit
- 62: Zustandssteuereinheit
- 63a: Umgebungssensor
- 63b: Maschinenzustandssensor
- 64: Heizschaltung, Temperiervorrichtung
- 66: Heizregler
- 68: elektrisches Schaltelement
- 70: elektrisches Schaltelement
- 72: elektrischer Widerstand
- 74: elastisches Lagerelement
- 76: Gelenkarm
- 78: Trägerplatte
- 80: Zwischenelement
- 82: Notbremsbaugruppe
- 84a: erste Hülse
- 84b: zweite Hülse
- A: Abmessung
- B1: erster Betriebsparameter
- B2: zweiter Betriebsparameter
- I_{BE}: Strom durch das Betätigungselement
- L_{BE}: Länge des Betätigungselements
- R_{BE}: elektrischer Widerstand des Betätigungselements
- R_{LS}: elektrischer Widerstand der Ladeschaltung
- SP: Betätigungsstromparameter
- U: Umgebungsparameter
- U_{BE}: Spannungsabfall über dem Betätigungselement

## Patentansprüche

1. Notbremsbaugruppe (82) für ein motorisch angetriebenes Werkzeug (8), umfassend eine Haltestruktur (35), ein drehbar an der Haltestruktur (35) gelagertes Bremselement (29), insbesondere einen Bremsnocken (30), und ein drahtförmiges Betätigungselement (34), welches eine Formgedächtnislegierung (36) umfasst, wobei ein erstes Ende (34a) des Betätigungselements (34) an der Haltestruktur (35) befestigt ist und ein zweites Ende (34b) des Betätigungselements (34) antriebsmäßig mit dem Bremselement (29) gekoppelt ist.

2. Notbremsbaugruppe (82) nach Anspruch 1, wobei das zweite Ende (34b) des Betätigungselements (34) am Bremselement (29) befestigt ist.

3. Notbremsbaugruppe (82) nach Anspruch 1, wobei das zweite Ende (34b) des Betätigungselements (34) über wenigstens ein Zwischenelement (80) mit dem Bremselement (29) gekoppelt ist.

4. Notbremsbaugruppe (82) nach Anspruch 3, wobei das wenigstens eine Zwischenelement (80) einen Schlitten (38) umfasst, der bewegbar an der Haltestruktur (35) gelagert ist.

5. Notbremsbaugruppe (82) nach Anspruch 4, wobei der Schlitten (38) über eine Schiebeführung translatorisch bewegbar an der Haltestruktur (35) gelagert ist, und/oder wobei der Schlitten über wenigstens einen Gelenkarm (76) bewegbar an der Haltestruktur (35) gelagert ist, und/oder wobei der Schlitten (38) über ein elastisches Lagerelement (74) mit der Haltestruktur (35) verbunden ist.

6. Notbremsbaugruppe (82) nach einem der Ansprüche 3 bis 5, wobei das wenigstens eine Zwischenelement (80) einen Stößel oder einen Betätigungsstift (40) mit einem bremselementseitigen Ende (41) umfasst, wobei das bremselementseitige Ende (41) des Stößels oder Betätigungsstifts (40) am Bremselement (29) anliegt oder ans Bremselement (29) anlegbar ist.

7. Notbremsbaugruppe (82) nach einem der vorhergehenden Ansprüche, wobei das Betätigungselement (34) mittels eines Führungselements geführt ist.

8. Notbremsbaugruppe (82) nach einem der vorhergehenden Ansprüche, ferner umfassend ein Federelement (37), welches das Betätigungselement (34) direkt oder indirekt in eine Richtung federbeaufschlagt, die einer Zugbelastung des Betätigungselements (34) entspricht.

9. Notbremsbaugruppe (82) nach einem der vorhergehenden Ansprüche, wobei die Haltestruktur (35) durch ein Aktuatorgehäuse (39) und/oder einen Bremssattel (26) gebildet ist, insbesondere wobei eine Ansteuereinheit für das Betätigungselement (34) zumindest abschnittsweise ins Aktuatorgehäuse (39) integriert ist.

10. Notbremsbaugruppe (82) nach einem der vorhergehenden Ansprüche, wobei am ersten Ende (34a) des Betätigungselements (34) eine erste Hülse (84a) vorgesehen ist und das erste Ende (34a) des Betätigungselements (34) über die erste Hülse (84a) an der Haltestruktur (35) befestigt ist.

11. Notbremsbaugruppe (82) nach einem der vorhergehenden Ansprüche, wobei am zweiten Ende (34b) des Betätigungselements (34) eine zweite Hülse (84b) vorgesehen ist und das zweite Ende (34b) des Betätigungselements (34) über die zweite Hülse (84b) antriebsmäßig mit dem Bremselement (29) gekoppelt ist.

12. Notbremsbaugruppe (82) nach einem der vorhergehenden Ansprüche, wobei eine Länge (L_{BE}) des Betätigungselements (34) kleiner ist als eine Abmessung (A) der Notbremseinheit (24) entlang einer Richtung parallel zur Länge (L_{BE}) des Betätigungselements (34) und/oder wobei eine Länge (L_{BE}) des Betätigungselements (34) vollständig innerhalb einer parallel zur Länge (L_{BE}) des Betätigungselements (34) gemessenen Abmessung (A) der Notbremseinheit (24) liegt.

13. Notbremsbaugruppe (82) nach einem der vorhergehenden Ansprüche, wobei das Betätigungselement (34) und/oder ein Abschnitt der Haltestruktur (35) einen Antriebskoppelabschnitt des Bremselements (29) mechanisch abschirmt.

14. Verfahren zum Betreiben einer Notbremsbaugruppe (82) mit einem beweglich gelagerten Bremselement (29), insbesondere einem Bremsnocken (30), zum Bremsen eines Schneidelements eines motorisch angetriebenen Werkzeugs (8), wobei die Notbremsbaugruppe (82) ferner ein drahtförmiges Betätigungselement (34) aufweist, welches eine Formgedächtnislegierung (36) umfasst, und das Betätigungselement (34) antriebsmäßig mit dem Bremselement (29) gekoppelt ist, umfassend:
- in Bewegung setzen des Bremselements (29) mittels der Betätigungselements (34) und
- anschließendes Aufheben oder Beenden einer Bewegungskopplung zwischen Betätigungselement (34) und Bremselement (29).

15. Verfahren nach Anspruch 14, ferner umfassend: Rückstellen des Betätigungselements (34) in eine Ausgangsstellung, wobei das Rückstellen unabhängig vom Bremselement (29) erfolgt.

## Claims

1. Emergency brake assembly (82) for a motor-driven tool (8), comprising a holding structure (35), a brake element (29) rotatably mounted on the holding structure (35), in particular a brake cam (30), and a wire-shaped actuating element (34) comprising a shape memory alloy (36), wherein a first end (34a) of the actuating element (34) is attached to the holding structure (35) and a second end (34b) of the actuating element (34) is coupled to the brake element (29) in terms of drive.

2. Emergency brake assembly (82) according to claim 1, wherein the second end (34b) of the actuating element (34) is attached to the brake element (29).

3. Emergency brake assembly (82) according to claim 1, wherein the second end (34b) of the actuating element (34) is coupled to the brake element (29) via at least one intermediate element (80).

4. Emergency brake assembly (82) according to claim 3, wherein the at least one intermediate element (80) comprises a slide (38) movably mounted on the holding structure (35).

5. Emergency brake assembly (82) according to claim 4,
wherein the slide (38) is mounted on the holding structure (35) so as to be movable in translation via a sliding guide, and/or
wherein the slide is movably mounted on the holding structure (35) via at least one articulated arm (76), and/or
wherein the slide (38) is connected to the holding structure (35) via a resilient bearing element (74).

6. Emergency brake assembly (82) according to any of claims 3 to 5, wherein the at least one intermediate element (80) comprises a plunger or an actuating pin (40) having a brake-element-side end (41), wherein the brake-element-side end (41) of the plunger or actuating pin (40) is positioned against the brake element (29) or can be placed against the brake element (29).

7. Emergency brake assembly (82) according to any of the preceding claims, wherein the actuating element (34) is guided by means of a guide element.

8. Emergency brake assembly (82) according to any of the preceding claims, further comprising a spring element (37) which directly or indirectly spring-loads the actuating element (34) in a direction corresponding to a tensile load on the actuating element (34).

9. Emergency brake assembly (82) according to any of the preceding claims, wherein the holding structure (35) is formed by an actuator housing (39) and/or a brake calliper (26), in particular wherein a control unit for the actuating element (34) is integrated at least in portions into the actuator housing (39).

10. Emergency brake assembly (82) according to any of the preceding claims, wherein a first sleeve (84a) is provided at the first end (34a) of the actuating element (34) and the first end (34a) of the actuating element (34) is attached to the holding structure (35) via the first sleeve (84a).

11. Emergency brake assembly (82) according to any of the preceding claims, wherein a second sleeve (84b) is provided at the second end (34b) of the actuating element (34) and the second end (34b) of the actuating element (34) is coupled to the brake element (29) in terms of drive via the second sleeve (84b).

12. Emergency brake assembly (82) according to any of the preceding claims, wherein a length (L_{BE}) of the actuating element (34) is less than a dimension (A) of the emergency brake unit (24) along a direction parallel to the length (L_{BE}) of the actuating element (34) and/or wherein a length (L_{BE}) of the actuating element (34) is positioned entirely within a dimension (A) of the emergency brake unit (24) as measured parallel to the length (L_{BE}) of the actuating element (34).

13. Emergency brake assembly (82) according to any of the preceding claims, wherein the actuating element (34) and/or a portion of the holding structure (35) mechanically shields a drive coupling portion of the brake element (29).

14. Method for operating an emergency brake assembly (82) having a movably mounted brake element (29), in particular a brake cam (30), for braking a cutting element of a motor-driven tool (8), wherein the emergency brake assembly (82) further has a wire-shaped actuating element (34) comprising a shape memory alloy (36) and the actuating element (34) is coupled to the brake element (29) in terms of drive, comprising:
- setting the brake element (29) in movement by means of the actuating element (34) and
- subsequently undoing or terminating a movement coupling between the actuating element (34) and the braking element (29).

15. Method according to claim 14, further comprising: resetting the actuating element (34) to a starting position, wherein the resetting takes place independently of the braking element (29).

## Revendications

1. Ensemble de freinage d'urgence (82) pour un outil motorisé (8), comprenant une structure de support (35), un élément de freinage (29) monté de manière rotative sur la structure de support (35), en particulier une came de freinage (30), et un élément d'actionnement filiforme (34) comprenant un alliage à mémoire de forme (36), une première extrémité (34a) de l'élément d'actionnement (34) étant fixée à la structure de support (35) et une deuxième extrémité (34b) de l'élément d'actionnement (34) étant couplée en entraînement à l'élément de freinage (29).

2. Ensemble de freinage d'urgence (82) selon la revendication 1, dans lequel la deuxième extrémité (34b) de l'élément d'actionnement (34) est fixée à l'élément de freinage (29).

3. Ensemble de freinage d'urgence (82) selon la revendication 1, dans lequel la deuxième extrémité (34b) de l'élément d'actionnement (34) est couplée à l'élément de freinage (29) au moyen d'au moins un élément intermédiaire (80).

4. Ensemble de freinage d'urgence (82) selon la revendication 3, dans lequel ledit au moins un élément intermédiaire (80) comprend un chariot (38) monté de manière mobile sur la structure de support (35).

5. Ensemble de freinage d'urgence (82) selon la revendication 4,
dans lequel le chariot (38) est monté de manière à pouvoir se déplacer en translation sur la structure de support (35) au moyen d'une glissière, et/ou
dans lequel le chariot est monté de manière mobile sur la structure de support (35) au moyen d'au moins un bras articulé (76), et/ou
dans lequel le chariot (38) est relié à la structure de support (35) au moyen d'un élément de support élastique (74).

6. Ensemble de freinage d'urgence (82) selon l'une des revendications 3 à 5, dans lequel ledit au moins un élément intermédiaire (80) comprend un poussoir ou une tige d'actionnement (40) avec une extrémité côté élément de freinage (41), l'extrémité côté élément de freinage (41) du poussoir ou de la tige d'actionnement (40) étant en appui contre l'élément de freinage (29) ou pouvant être mis en appui contre l'élément de freinage (29).

7. Ensemble de freinage d'urgence (82) selon l'une des revendications précédentes, dans lequel l'élément d'actionnement (34) est guidé au moyen d'un élément de guidage.

8. Ensemble de freinage d'urgence (82) selon l'une des revendications précédentes, comprenant en outre un élément ressort (37) qui sollicite élastiquement l'élément d'actionnement (34) directement ou indirectement dans une direction qui correspond à une charge de traction de l'élément d'actionnement (34).

9. Ensemble de freinage d'urgence (82) selon l'une des revendications précédentes, dans lequel la structure de support (35) est formée par un boîtier d'actionneur (39) et/ou un étrier de frein (26), en particulier dans lequel une unité de commande pour l'élément d'actionnement (34) est intégrée au moins en partie dans le boîtier d'actionneur (39).

10. Ensemble de freinage d'urgence (82) selon l'une des revendications précédentes, dans lequel une première douille (84a) est prévue à la première extrémité (34a) de l'élément d'actionnement (34) et la première extrémité (34a) de l'élément d'actionnement (34) est fixée à la structure de support (35) au moyen de la première douille (84a).

11. Ensemble de freinage d'urgence (82) selon l'une des revendications précédentes, dans lequel une deuxième douille (84b) est prévue à la deuxième extrémité (34b) de l'élément d'actionnement (34) et la deuxième extrémité (34b) de l'élément d'actionnement (34) est couplée en entraînement à l'élément de freinage (29) au moyen de la deuxième douille (84b).

12. Ensemble de freinage d'urgence (82) selon l'une des revendications précédentes, dans lequel une longueur (L_{BE}) de l'élément d'actionnement (34) est inférieure à une dimension (A) de l'unité de freinage d'urgence (24) le long d'une direction parallèle à la longueur (L_{BE}) de l'élément d'actionnement (34) et/ou dans lequel une longueur (L_{BE}) de l'élément d'actionnement (34) se situe entièrement à l'intérieur d'une dimension (A) de l'unité de freinage d'urgence (24) mesurée parallèlement à la longueur (L_{BE}) de l'élément d'actionnement (34).

13. Ensemble de freinage d'urgence (82) selon l'une des revendications précédentes, dans lequel l'élément d'actionnement (34) et/ou une partie de la structure de support (35) protège mécaniquement une partie de couplage d'entraînement de l'élément de freinage (29).

14. Procédé pour faire fonctionner un ensemble de freinage d'urgence (82) comprenant un élément de freinage (29) monté de manière mobile, en particulier une came de freinage (30), pour freiner un élément de coupe d'un outil motorisé (8), l'ensemble de freinage d'urgence (82) présentant en outre un élément d'actionnement filiforme (34) qui comprend un alliage à mémoire de forme (36), et l'élément d'actionnement (34) étant couplé en entraînement à l'élément de freinage (29), comprenant de :
- mettre en mouvement l'élément de freinage (29) au moyen de l'élément d'actionnement (34) et
- annuler ou terminer ensuite un couplage de mouvement entre l'élément d'actionnement (34) et l'élément de freinage (29).

15. Procédé selon la revendication 14, consistant en outre à : rappeler l'élément d'actionnement (34) dans une position initiale, ledit rappel s'effectuant indépendamment de l'élément de freinage (29).
